(19) Europäisches Patentamt
European Patent Office
Office européen des brevets

(11) **EP 4 554 116 A1**

(12) **EUROPEAN PATENT APPLICATION**
published in accordance with Art. 153(4) EPC

(43) Date of publication:
**14.05.2025 Bulletin 2025/20**

(21) Application number: **23845242.9**

(22) Date of filing: **30.06.2023**

(51) International Patent Classification (IPC):
*H04B 10/25 (2013.01)*

(52) Cooperative Patent Classification (CPC):
**H04B 10/25; H04B 10/50; H04B 10/61**

(86) International application number:
**PCT/CN2023/104768**

(87) International publication number:
**WO 2024/022029 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 CN 202210901631**

(71) Applicant: **Huawei Technologies Co., Ltd.
Shenzhen, Guangdong 518129 (CN)**

(72) Inventors:
• **CHEN, Xi
Shenzhen, Guangdong 518129 (CN)**
• **ZHANG, Kuo
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SINGLE-FIBER BIDIRECTIONAL COMMUNICATION METHOD, COMMUNICATION APPARATUS, AND SYSTEM**

(57) A single-fiber bidirectional communication method, a communication apparatus, and a system are provided, and relate to the field of optical communication technologies. A first node may implement, through a first laser, functions of sending a first optical signal and receiving a second optical signal, and a second node may implement, through a second laser, functions of sending the second optical signal and receiving the first optical signal. Based on the method, the first node and the second node each can implement single-fiber bidirectional communication by using only one laser, so that costs of optical communication can be effectively reduced, and sizes of optical modules can be reduced.

FIG. 6

**Description**

This application claims priority to Chinese Patent Application No. 202210901631.5, filed with the China National Intellectual Property Administration on July 28, 2022 and entitled "SINGLE-FIBER BIDIRECTIONAL COMMUNICATION METHOD, COMMUNICATION APPARATUS, AND SYSTEM", which is incorporated herein by reference in its entirety.

**TECHNICAL FIELD**

This application relates to the field of optical communication technologies, and in particular, to a single-fiber bidirectional communication method, a communication apparatus, and a system.

**BACKGROUND**

Most communication in an optical fiber communication system is bidirectional communication, and both communication parties can perform sending and receiving at the same time. Currently, in an optical fiber communication system, bidirectional communication may be implemented based on a single fiber or may be implemented based on two fibers. If bidirectional communication is implemented based on two fibers, received and sent signals in the bidirectional communication may be carried on different optical fibers. If bidirectional communication is implemented based on a single fiber, received and sent signals in the bidirectional communication may be carried on different wavelengths of one optical fiber.

Compared with an implementation of two-fiber communication, single-fiber bidirectional communication can use only one optical fiber to complete work that originally needs to be completed by two optical fibers, so that optical fiber resources can be saved.

However, in a single-fiber bidirectional communication system, optical modules of both communication parties need to receive and send signals of different wavelengths. Therefore, two lasers of different wavelengths need to be used. This increases sizes and costs of the optical modules.

**SUMMARY**

This application provides a single-fiber bidirectional communication method, a communication apparatus, and a system, to resolve a problem that sizes and costs of optical modules cannot be reduced because different lasers need to be used in a single-fiber bidirectional communication system to receive and send signals of different wavelengths.

To achieve the foregoing objectives, the following technical solutions are used in this application.

According to a first aspect, this application provides a single-fiber bidirectional communication method. The single-fiber bidirectional communication method may be applied to a first node. The first node includes a first optical module. The first optical module may include a first laser, a first connection unit, a first coherent receiver, a first laser modulator, and a second connection unit. The first laser is separately connected to the first laser modulator and the first coherent receiver by the first connection unit. The first coherent receiver and the first laser modulator are connected to a same optical fiber by the second connection unit. The single-fiber bidirectional communication method may include: The first node sends a first optical signal to a second node through the first laser modulator. The first optical signal is obtained by modulating laser light emitted by the first laser. The first node receives a second optical signal from the second node through the first coherent receiver. The first laser is configured to generate local oscillator light required by the first coherent receiver. A center frequency of the first optical signal is $f_1$, a center frequency of the second optical signal is $f_2$, $f_1$ is different from $f_2$, and $|f_1 - f_2|$ is less than a first threshold. In this solution, each of the first node and the second node only needs to use one laser. This solution can effectively reduce costs of optical communication, and can reduce sizes of optical modules.

With reference to the first aspect, in a possible implementation, a frequency range of the first optical signal and a frequency range of the second optical signal do not overlap or partially overlap.

With reference to the first aspect, in a possible implementation, $|f_1 - f_2| \geq \frac{w_1}{2}$ or $|f_1 - f_2| \geq \frac{w_2}{2}$. $w_1$ is a maximum frequency band width of the first optical signal, and $w_2$ is a maximum frequency band width of the second optical signal.

With reference to the first aspect, in a possible implementation, if an output frequency of the first laser is $f_3$, $f_1 - \frac{w_1}{2} < f_3 < f_2 + \frac{w_2}{2}$, or $f_2 - \frac{w_2}{2} < f_3 < f_1 + \frac{w_1}{2}$. $w_1$ is the maximum frequency band width of the first optical signal, and $w_2$ is the maximum frequency band width of the second optical signal.

With reference to the first aspect, in a possible implementation, the output frequency of the first laser is $f_3$, and $f_3 = f_1$.

With reference to the first aspect, in a possible implementation, if the output frequency of the first laser is $f_3$, a frequency range of receiving the second optical signal by the first coherent receiver is $(f_3 - \Delta x)$ to $f_3$ and $f_3$ to $(f_3 + \Delta x)$, and $\Delta x \geq |f_3 - f_2| + \frac{w_2}{2}$. $w_2$ is the maximum frequency band width of the second optical signal.

With reference to the first aspect, in a possible implementation, the single-fiber bidirectional communication method may further include: The first node may send, to the second node, a first parameter for adjusting the first optical signal. Then, the first node may receive first indication information from the second node. The first indication information indicates that the second node agrees to adjust the first optical signal based on the first parameter. Subsequently, the first node may send second indication information to the second node. The second indication information indicates that the first node starts to adjust the first optical signal. In addition, the first node adjusts the maximum frequency band width of the first optical signal to $w_1'$, and/or adjusts the center frequency of the first optical signal to $f_1'$. Further, the first node may send third indication information to the second node. The third indication information indicates that the first node has completed adjustment of the first optical signal.

With reference to the first aspect, in a possible implementation, the first parameter includes $w_1'$ and/or $f_1'$, or $\Delta w_1$ and/or $f_1'$. $\Delta w_1 = w_1' - w_1$.

With reference to the first aspect, in a possible implementation, the single-fiber bidirectional communication method may further include: First, the first node may send, to the second node, a second parameter for adjusting the second optical signal. Then, the first node receives fourth indication information from the second node. The fourth indication information indicates that the second node agrees to adjust the second optical signal based on the second parameter. Subsequently, the first node may send fifth indication information to the second node. The fifth indication information indicates the second node to start to adjust the second optical signal. Further, the first node may receive sixth indication information from the second node. The sixth indication information indicates that the second node has completed adjustment of the second optical signal.

With reference to the first aspect, in a possible implementation, the first parameter includes $w_2'$ and/or $f_2'$, or $\Delta w_2$ and/or $f_2'$. $\Delta w_2 = w_2' - w_2$.

With reference to the first aspect, in a possible implementation, the single-fiber bidirectional communication method may further include: First, the first node sends, to the second node, a third parameter for adjusting the first optical signal and the second optical signal. Subsequently, the first node receives seventh indication information from the second node. The seventh indication information indicates that the second node agrees to adjust the first optical signal and the second optical signal based on the third parameter. The first node sends second indication information to the second node. The second indication information indicates that the first node starts to adjust the first optical signal. The first node adjusts the maximum frequency band width of the first optical signal to $w_1'$, and/or adjusts the center frequency of the first optical signal to $f_1'$. The first node sends third indication information to the second node. The third indication information indicates that the first node has completed adjustment of the first optical signal. The first node sends fifth indication information to the second node. The fifth indication information indicates the second node to start to adjust the second optical signal. The first node receives sixth indication information from the second node. The sixth indication information indicates that the second node has completed adjustment of the second optical signal.

With reference to the first aspect, in a possible implementation, the single-fiber bidirectional communication method may further include: The first node sends, to the second node, a third parameter for adjusting the first optical signal and the second optical signal. The first node receives seventh indication information from the second node. The seventh indication information indicates that the second node agrees to adjust the first optical signal and the second optical signal based on the third parameter. The first node sends fifth indication information to the second node. The fifth indication information indicates the second node to start to adjust the second optical signal. The first node receives sixth indication information from the second node. The sixth indication information indicates that the second node has completed adjustment of the second optical signal. The first node sends second indication information to the second node. The second indication information indicates that the first node starts to adjust the first optical signal. The first node adjusts the maximum frequency band width of the first optical signal to $w_1'$, and/or adjusts the center frequency of the first optical signal to $f_1'$. The first node sends third indication information to the second node. The third indication information indicates that the first node has completed adjustment of the first optical signal.

With reference to the first aspect, in a possible implementation, the third parameter includes at least one of $f_1'$, $w_1'$, or $\Delta w_1$, and at least one of $f_2'$, $w_2'$, or $\Delta w_2$. $\Delta w_1 = w_1' - w_1$, and $\Delta w_2 = w_2' - w_2$.

With reference to the first aspect, in a possible implementation, the first node communicates with n nodes through the first optical module. n ≥ 2. When the second node is a $k^{th}$ node in the n nodes, $f_1 = f_{Ak}$, and $f_2 = f_{Bk}$. $f_{Ak}$ is a center frequency of an optical signal $A_k$ sent by the first node to the $k^{th}$ node in the n nodes. $f_{Bk}$ is a center frequency of an optical signal $B_k$ sent by the $k^{th}$ node to the first node. k is a positive integer from 1 to n.

With reference to the first aspect, in a possible implementation, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Ak} < f_{Bk}$, or if k is an even number, $f_{Bk} < f_{Ak}$. Alternatively, if k is an odd number, $f_{Bk} < f_{Ak}$, or if k is an even number, $f_{Ak} < f_{Bk}$.

With reference to the first aspect, in a possible implementation, the single-fiber bidirectional communication method may further include: The first node sends, to the $k^{th}$ node in the n nodes, a fourth parameter for adjusting the optical signal $A_k$. The first node receives eighth indication information from the $k^{th}$ node in the n nodes. The eighth indication information indicates that the $k^{th}$ node in the n nodes agrees to adjust the optical signal $A_k$ based on the fourth parameter. The first node sends ninth indication information to the $k^{th}$ node in the n nodes. The ninth indication information indicates that the first node starts to adjust the optical signal $A_k$. The first node adjusts a maximum frequency band width of the optical signal $A_k$ to $w'_{Ak}$, and/or adjusts the center frequency of the optical signal $A_k$ to $f'_{Ak}$. The first node sends tenth indication information to the $k^{th}$ node in the n nodes. The tenth indication information indicates that the first node has completed adjustment of the optical signal $A_k$.

With reference to the first aspect, in a possible implementation, the fourth parameter includes $w'_{Ak}$ and/or $f'_{Ak}$, or $\Delta w_{Ak}$ and/or $f'_{Ak}$. $\Delta w_{Ak} = w'_{Ak} - w_{Ak}$.

With reference to the first aspect, in a possible implementation, the single-fiber bidirectional communication method may further include: The first node sends, to the $k^{th}$ node in the n nodes, a fifth parameter for adjusting the optical signal $B_k$. The first node receives eleventh indication information from the $k^{th}$ node in the n nodes. The eleventh indication information indicates that the $k^{th}$ node in the n nodes agrees to adjust the optical signal $B_k$ based on the fifth parameter. The first node sends twelfth indication information to the $k^{th}$ node in the n nodes. The twelfth indication information indicates the $k^{th}$ node in the n nodes to start to adjust the optical signal $B_k$. The first node receives thirteenth indication information from the $k^{th}$ node in the n nodes. The thirteenth indication information indicates that the $k^{th}$ node in the n nodes has completed adjustment of the optical signal $B_k$.

With reference to the first aspect, in a possible implementation, the fifth parameter includes $w'_{Bk}$ and/or $f'_{Bk}$, or $\Delta w_{Bk}$ and/or $f'_{Bk}$. $\Delta w_{Bk} = w'_{Bk} - w_{Bk}$.

With reference to the first aspect, in a possible implementation, the single-fiber bidirectional communication method may further include: The first node sends, to the $k^{th}$ node in the n nodes, a sixth parameter for adjusting the optical signal $A_k$ and the optical signal $B_k$. The first node receives fourteenth indication information from the $k^{th}$ node in the n nodes. The fourteenth indication information indicates that the $k^{th}$ node in the n nodes agrees to adjust the optical signal $A_k$ and the optical

signal $B_k$ based on the sixth parameter. The first node sends ninth indication information to the $k^{th}$ node in the n nodes. The ninth indication information indicates that the first node starts to adjust the optical signal $A_k$. The first node adjusts a maximum frequency band width of the optical signal $A_k$ to $w'_{Ak}$, and/or adjusts the center frequency of the optical signal $A_k$ to $f'_{Ak}$. The first node sends tenth indication information to the $k^{th}$ node in the n nodes. The tenth indication information indicates that the first node has completed adjustment of the optical signal $A_k$. The first node sends twelfth indication information to the $k^{th}$ node in the n nodes. The twelfth indication information indicates the $k^{th}$ node in the n nodes to start to adjust the optical signal $B_k$. The first node receives thirteenth indication information from the $k^{th}$ node in the n nodes. The thirteenth indication information indicates that the $k^{th}$ node in the n nodes has completed adjustment of the optical signal $B_k$.

With reference to the first aspect, in a possible implementation, the single-fiber bidirectional communication method may further include: The first node sends, to the $k^{th}$ node in the n nodes, a sixth parameter for adjusting the optical signal $A_k$ and the optical signal $B_k$. The first node receives fourteenth indication information from the $k^{th}$ node in the n nodes. The fourteenth indication information indicates that the $k^{th}$ node in the n nodes agrees to adjust the optical signal $A_k$ and the optical signal $B_k$ based on the sixth parameter. The first node sends twelfth indication information to the $k^{th}$ node in the n nodes. The twelfth indication information indicates the $k^{th}$ node in the n nodes to start to adjust the optical signal $B_k$. The first node receives thirteenth indication information from the $k^{th}$ node in the n nodes. The thirteenth indication information indicates that the $k^{th}$ node in the n nodes has completed adjustment of the optical signal $B_k$. The first node sends ninth indication information to the $k^{th}$ node in the n nodes. The ninth indication information indicates that the first node starts to adjust the optical signal $A_k$. The first node adjusts a maximum frequency band width of the optical signal $A_k$ to $w'_{Ak}$, and/or adjusts the center frequency of the optical signal $A_k$ to $f'_{Ak}$. The first node sends tenth indication information to the $k^{th}$ node in the n nodes. The tenth indication information indicates that the first node has completed adjustment of the optical signal $A_k$.

With reference to the first aspect, in a possible implementation, the sixth parameter includes at least one of $f'_{Ak}$, $w'_{Ak}$, or $\Delta w_{Ak}$, and at least one of $f'_{Bk}$, $w'_{Bk}$, or $\Delta w_{Bk}$. $\Delta w_{Ak} = w'_{Ak} - w_{Ak}$, and $\Delta w_{Bk} = w'_{Bk} - w_{Bk}$.

With reference to the first aspect, in a possible implementation, before the first node sends ninth indication information to the $k^{th}$ node in the n nodes, the single-fiber bidirectional communication method may further include: The first node sends, to a node x in the n nodes, a seventh parameter for adjusting an optical signal $A_x$ and/or an optical signal $B_x$. The seventh parameter includes an adjusted center frequency $f'_{Ax}$ of the optical signal $A$ and/or an adjusted center frequency $f'_{Bx}$ of the optical signal $B_x$. The first node receives fifteenth indication information from the node x in the n nodes. The fifteenth indication information indicates that the node x in the n nodes agrees to adjust the optical signal $A_x$ and/or the optical signal $B_x$ based on the seventh parameter. x is a positive integer from 1 to n, and x is not equal to k.

With reference to the first aspect, in a possible implementation, before the first node sends twelfth indication information to the k$^{th}$ node in the n nodes, the single-fiber bidirectional communication method may further include: The first node sends, to a node x in the n nodes, a seventh parameter for adjusting an optical signal $A_x$ and/or an optical signal $B_x$. The seventh parameter includes an adjusted center frequency $f'_{Ax}$ of the optical signal $A$ and/or an adjusted center frequency $f'_{Bx}$ of the optical signal $B_x$. The first node receives fifteenth indication information from the node x in the n nodes. The fifteenth indication information indicates that the node x in the n nodes agrees to adjust the optical signal $A_x$ and/or the optical signal $B_x$ based on the seventh parameter. x is a positive integer from 1 to n, and x is not equal to k.

According to a second aspect, this application provides a single-fiber bidirectional communication method. The single-fiber bidirectional communication method may be applied to a second node. The second node may include a second optical module. The second optical module includes a second laser, a third connection unit, a second coherent receiver, a second laser modulator, and a fourth connection unit. The second laser is separately connected to the second laser modulator and the second coherent receiver by the third connection unit. The second coherent receiver and the second laser modulator are connected to a same optical fiber by the fourth connection unit. The single-fiber bidirectional communication method may include: The second node sends a second optical signal to a first node through the first laser modulator. The second optical signal is obtained by modulating laser light emitted by the second laser. The second node receives a first optical signal from the first node through the second coherent receiver. The second laser is configured to generate local oscillator light required by the second coherent receiver. A center frequency of the first optical signal is $f_1$, a center frequency of the second optical signal is $f_2$, $f_1$ is different from $f_2$, and $|f_1 - f_2|$ is less than a first threshold.

With reference to the second aspect, in a possible implementation, if an output frequency of the sec-

ond laser is $f_4$, $$f_1 - \frac{w_1}{2} < f_4 < f_2 + \frac{w_2}{2}$$ or $$f_2 - \frac{w_2}{2} < f_4 < f_1 + \frac{w_1}{2}.$$ $w_1$ is a maximum frequency band width of the first optical signal. $w_2$ is a maximum frequency band width of the second optical signal.

With reference to the second aspect, in a possible implementation, the output frequency of the first laser is $f_4$, and $f_4 = f_2$.

With reference to the second aspect, in a possible implementation, if the output frequency of the first laser is $f_3$, a frequency range of receiving the second optical signal by the first coherent receiver is $(f_4 - \Delta y)$ to $f_4$ and $f_4$ to $(f_4 + \Delta y)$, and $$\Delta y \geq |f_4 - f_1| + \frac{w_1}{2}.$$ $w_1$ is the maximum frequency band width of the first signal.

With reference to the second aspect, in a possible implementation, the single-fiber bidirectional communication method may further include: The second node receives a first parameter that is from the first node and that is for adjusting the first optical signal. Then, the second node may send first indication information to the first node. The first indication information indicates that the second node agrees to adjust the first optical signal based on the first parameter. Subsequently, the second node may receive second indication information from the first node. The second indication information indicates that the first node starts to adjust the first optical signal. **In** addition, the second node may receive third indication information from the first node. The third indication information indicates that the first node has completed adjustment of the first optical signal.

With reference to the second aspect, in a possible implementation, the first parameter includes $w'_1$ and/or $f'_1$, or $\Delta w_1$ and/or $f'_1$. $\Delta w_1 = w'_1 - w_1$.

With reference to the second aspect, in a possible implementation, the single-fiber bidirectional communication method may further include: First, the second node may receive a second parameter that is from the first node and that is for adjusting the second optical signal. Then, the second node may send fourth indication information to the first node. The fourth indication information indicates that the second node agrees to adjust the second optical signal based on the second parameter. Subsequently, the second node may receive fifth indication information from the first node. The fifth indication information indicates the second node to start to adjust the second optical signal. Further, the second node may adjust the maximum frequency band width of the second optical signal to $w'_2$, and/or adjust the center frequency of the second optical signal to $f'_2$. Finally, the second node may send sixth indication information to the first node. The sixth indication information indicates that the second node has completed adjustment of the second optical signal.

With reference to the second aspect, in a possible implementation, the first parameter includes $w_2'$ and/or $f_2'$, or $\Delta w_2$ and/or $f_2'$. $\Delta w_2 = w_2' - w_2$.

With reference to the second aspect, in a possible implementation, the single-fiber bidirectional communication method may further include: First, the second node may receive a third parameter that is from the first node and that is for adjusting the first optical signal and the second optical signal. Then, the second node may send seventh indication information to the first node. The seventh indication information indicates that the second node agrees to adjust the first optical signal and the second optical signal based on the third parameter. Subsequently, the second node may receive second indication information sent from the first node. The second indication information indicates that the first node starts to adjust the first optical signal. In addition, the second node may receive third indication information from the first node. The third indication information indicates that the first node has completed adjustment of the first optical signal. Further, the first node may send fifth indication information to the second node. The fifth indication information indicates the second node to start to adjust the second optical signal. In addition, the second node may adjust the maximum frequency band width of the second optical signal to $w_2'$, and/or adjust the center frequency of the second optical signal to $f_2'$. Finally, the second node may send sixth indication information to the first node. The sixth indication information indicates that the second node has completed adjustment of the second optical signal.

With reference to the second aspect, in a possible implementation, the single-fiber bidirectional communication method may further include: First, the second node may receive a third parameter that is from the first node and that is for adjusting the first optical signal and the second optical signal. Then, the second node may send seventh indication information to the first node. The seventh indication information indicates that the second node agrees to adjust the first optical signal and the second optical signal based on the third parameter. Subsequently, the second node may further receive fifth indication information from the first node. The fifth indication information indicates the second node to start to adjust the second optical signal. In addition, the second node may adjust the maximum frequency band width of the second optical signal to $w_2'$, and/or adjust the center frequency of the second optical signal to $f_2'$. In addition, the second node may send sixth indication information to the first node. The sixth indication information indicates that the second node has completed adjustment of the second optical signal. Further, the second node may receive second indication information sent from the first node. The second indication information indicates that the first node starts to adjust the first optical signal. In addition, the second node may receive third indication information from the first node. The third indication information indicates that the first node has completed adjustment of the first optical signal.

With reference to the second aspect, in a possible implementation, the third parameter includes at least one of $f_1'$, $w_1'$, or $\Delta w_1$, and at least one of $f_2'$, $w_2'$, or $\Delta w_2$. $\Delta w_1 = w_1' - w_1$, and $\Delta w_2 = w_2' - w_2$.

With reference to the second aspect, in a possible implementation, the first node communicates with n nodes through the first optical module. n ≥ 2. When the second node is a k$^{th}$ node in the n nodes, $f_1 = f_{Ak}$, and $f_2 = f_{Bk}$. $f_{Ak}$ is a center frequency of an optical signal $A_k$ sent by the first node to the k$^{th}$ node in the n nodes. $f_{Bk}$ is a center frequency of an optical signal $B_k$ sent by the k$^{th}$ node to the first node.

With reference to the second aspect, in a possible implementation, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Ak} < f_{Bk}$, or if k is an even number, $f_{Bk} < f_{Ak}$. Alternatively, if k is an odd number, $f_{Bk} < f_{Ak}$, or if k is an even number, $f_{Ak} < f_{Bk}$.

According to a third aspect, this application provides a first node. The first node may include a first optical module. The first optical module may include a first laser, a first connection unit, a first coherent receiver, a first laser modulator, and a second connection unit. The first laser is separately connected to the first laser modulator and the first coherent receiver by the first connection unit. The first coherent receiver and the first laser modulator are connected to a same optical fiber by the second connection unit.

According to a fourth aspect, a second node is provided. The second node may include a second optical module. The second optical module may include a second laser, a third connection unit, a second coherent receiver, a second laser modulator, and a fourth connection unit. The second laser is separately connected to the second laser modulator and the second coherent receiver by the third connection unit. The second coherent receiver and the second laser modulator are connected to a same optical fiber by the fourth connection unit.

According to a fifth aspect, a communication system is provided. The communication system includes a first node that performs the single-fiber bidirectional communication method according to the first aspect, and a second node that performs the single-fiber bidirectional communication method according to the second aspect.

According to a sixth aspect, a communication apparatus is provided. The communication apparatus may include a processor and a first optical module. The processor may control the first optical module to perform the foregoing method according to any implementation of the first aspect.

With reference to the sixth aspect, in a possible implementation, the processor may be coupled to a memory. The memory may store computer instructions. The processor may control, after reading the computer instructions stored in the memory, the first optical module to perform the foregoing method according to any implementation of the first aspect. Optionally, the memory may further store data that the first optical module needs to send and/or data that is received by the first optical module.

With reference to the sixth aspect, in a possible implementation, the communication apparatus may further include a communication interface. The communication interface may be configured for digital communication between the communication apparatus and another communication apparatus. In an implementation, the communication interface may be implemented through an interface circuit.

According to a seventh aspect, a communication apparatus is provided. The communication apparatus may include a processor and a second optical module. The processor may control the second optical module to perform the foregoing method according to any implementation of the second aspect.

With reference to the seventh aspect, in a possible implementation, the processor may be coupled to a memory. The memory may store computer instructions. The processor may control, after reading the computer instructions stored in the memory, the second optical module to perform the foregoing method according to any implementation of the second aspect. Optionally, the memory may further store data that the second optical module needs to send and/or data that is received by the second optical module.

With reference to the seventh aspect, in a possible implementation, the communication apparatus may further include a communication interface. The communication interface may be configured for digital communication between the communication apparatus and another communication apparatus. In an implementation, the communication interface may be implemented through an interface circuit.

According to an eighth aspect, a computer-readable storage medium is provided. The computer-readable storage medium stores instructions. When the instructions are run on a computer, the computer is enabled to perform the foregoing method according to any implementation of the first aspect or the second aspect.

For technical effects brought by any design manner of the third aspect to the eighth aspect, refer to technical effects brought by different design manners of the first aspect or the second aspect. Details are not described herein again.

**BRIEF DESCRIPTION OF DRAWINGS**

FIG. 1 is a diagram of a point-to-point communication system based on two-fiber bidirectional communication according to an embodiment of this application;
FIG. 2 is a diagram of a point-to-multipoint communication system based on two-fiber bidirectional communication according to an embodiment of this application;
FIG. 3 is a diagram of a point-to-point communication system based on single-fiber bidirectional communication according to an embodiment of this application;
FIG. 4 is a diagram of a point-to-multipoint communication system based on single-fiber bidirectional communication according to an embodiment of this application;
FIG. 5 is a diagram of a structure of an optical module according to an embodiment of this application;
FIG. 6 is a flowchart of a single-fiber bidirectional communication method according to an embodiment of this application;
FIG. 7 is a diagram of a first optical signal and a second optical signal according to an embodiment of this application;
FIG. 8 is another diagram of a first optical signal and a second optical signal according to an embodiment of this application;
FIG. 9 is a flowchart of another single-fiber bidirectional communication method according to an embodiment of this application;
FIG. 10 is a flowchart of still another single-fiber bidirectional communication method according to an embodiment of this application;
FIG. 11 is a flowchart of still another single-fiber bidirectional communication method according to an embodiment of this application;
FIG. 12 is a flowchart of still another single-fiber bidirectional communication method according to an embodiment of this application;
FIG. 13 is a diagram of expanding a first optical signal according to an embodiment of this application;
FIG. 14 is another diagram of expanding a first optical signal according to an embodiment of this application;
FIG. 15 is still another diagram of expanding a first optical signal according to an embodiment of this application;
FIG. 16 is a diagram of optical signals transmitted between a first node and n nodes according to an embodiment of this application;
FIG. 17 is another diagram of optical signals transmitted between a first node and n nodes according to an embodiment of this application;
FIG. 18 is still another diagram of optical signals transmitted between a first node and n nodes according to an embodiment of this application;

FIG. 19 is still another diagram of optical signals transmitted between a first node and n nodes according to an embodiment of this application;

FIG. 20 is a flowchart of still another single-fiber bidirectional communication method according to an embodiment of this application;

FIG. 21 is a flowchart of still another single-fiber bidirectional communication method according to an embodiment of this application;

FIG. 22 is a flowchart of still another single-fiber bidirectional communication method according to an embodiment of this application;

FIG. 23 is a flowchart of still another single-fiber bidirectional communication method according to an embodiment of this application;

FIG. 24 is a diagram of expanding optical signals $A_k$ according to an embodiment of this application;

FIG. 25 is another diagram of expanding optical signals $A_k$ according to an embodiment of this application;

FIG. 26 is a diagram of a structure of a communication apparatus according to an embodiment of this application; and

FIG. 27 is a diagram of a structure of another communication apparatus according to an embodiment of this application.

## DESCRIPTION OF EMBODIMENTS

Before embodiments of this application are described, related technologies in this application are briefly described. The following interpretations and descriptions are intended to facilitate understanding of embodiments of this application, and should not be construed as any limitation on the scope of protection claimed in embodiments of this application.

A communication mode in which both communication parties can perform sending and receiving at the same time is referred to as full-duplex communication, and a communication mode in which both communication parties cannot perform sending and receiving at the same time is referred to as half-duplex communication. At present, full-duplex communication is mostly used in an optical fiber communication system, and is also often referred to as bidirectional communication. Because a transmission medium in the optical fiber communication system is an optical fiber, and transmission of an optical signal in the optical fiber is susceptible to interference by a reflection effect, received and sent signals in bidirectional communication are usually carried in different optical fibers or use different wavelengths in a same optical fiber.

Communication in which received and sent signals transmitted between both communication parties are carried in different optical fibers may be referred to as two-fiber bidirectional communication. For the two-fiber bidirectional communication, wavelengths of a received signal and a sent signal may be the same or may be different, and no limitation is required.

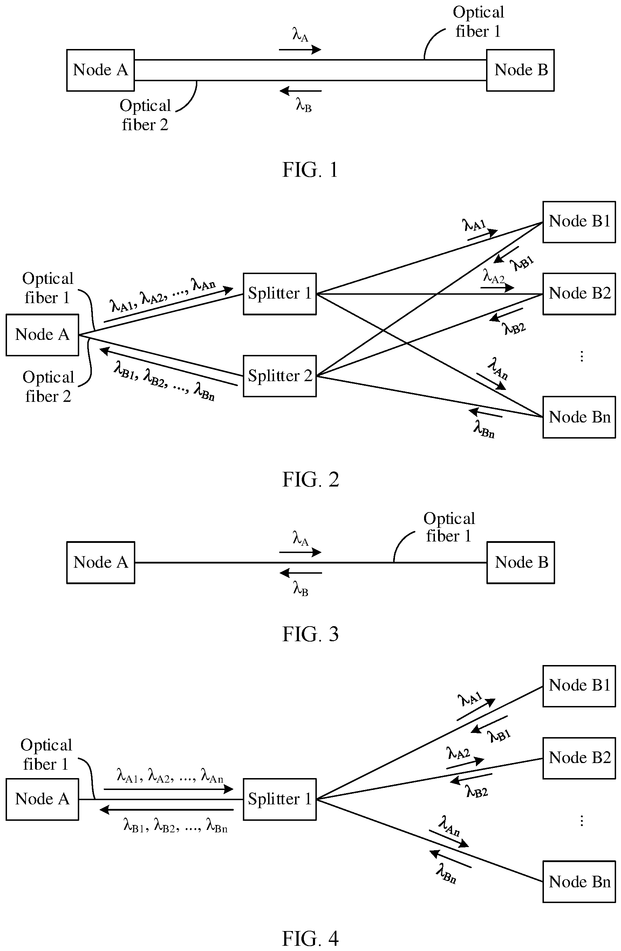

FIG. 1 is a diagram of a point-to-point communication system based on two-fiber bidirectional communication. As shown in FIG. 1, a node A and a node B are connected by two optical fibers. The node A sends an optical signal to the node B through an optical fiber 1, and a wavelength of the optical signal in the optical fiber 1 may be $\lambda_A$. The node B sends an optical signal to the node A through an optical fiber 2, and a wavelength of the optical signal in the optical fiber 2 may be $\lambda_B$. Values of $\lambda_A$ and $\lambda_B$ are not limited.

FIG. 2 is a diagram of a point-to-multipoint communication system based on two-fiber bidirectional communication. As shown in FIG. 2, a node A may be connected to n nodes, and the node A may communicate with any node in the n nodes through two optical fibers. n is a positive integer. A $k^{th}$ node in the n nodes may be referred to as a node Bk. k is a positive integer from 1 to n. Therefore, as shown in FIG. 2, the n nodes may include a node B1 to a node Bn. Still referring to FIG. 2, the node A may be connected to a splitter 1 by an optical fiber 1, and the splitter 1 may be separately connected to different nodes in the n nodes by one optical fiber. The node A may send an optical signal to any one of the n nodes through the optical fiber 1. The optical signal sent by the node A first arrives at the splitter 1 through the optical fiber 1, then is distributed by the splitter 1 to n optical fibers connected to the n nodes, and then is received by the n nodes. Optical signals sent by the node A to different nodes in the n nodes may be distinguished in time domain and/or frequency domain. The node A may be connected to a splitter 2 by an optical fiber 2, and the splitter 2 may be separately connected to different nodes in the n nodes by one optical fiber. The node A may receive optical signals from the n nodes through the splitter 2. An optical signal sent by any one of the n nodes to the node A first arrives at the splitter 2 through an optical fiber between the node and the splitter 2, then is aggregated to the optical fiber 2 through the splitter 2, and then is received by the node A. A wavelength of an optical signal sent by the node A to the node Bk is $\lambda_{Ak}$, and a wavelength of an optical signal received by the node A from the node Bk is $\lambda_{Bk}$. For example, as shown in FIG. 2, a wavelength of an optical signal sent by the node A to the node B1 is $\lambda_{A1}$, a wavelength of an optical signal received by the node A from the node B1 is $\lambda_{B1}$, a wavelength of an optical signal sent by the node A to the node B2 is $\lambda_{A2}$, a wavelength of an optical signal received by the node A from the node B2 is $\lambda_{B2}$, a wavelength of an optical signal sent by the node A to the node Bn is $\lambda_{An}$, and a wavelength of an optical signal received by the node A from the node Bn is $\lambda_{Bn}$. Values of $\lambda_{Ak}$ and $\lambda_{Bk}$ are not limited. Values of $\lambda_{Ak}$ and $\lambda_{A(k-1)}$ are not limited. Values of $\lambda_{Bk}$ and $\lambda_{B(k-1)}$ are not limited.

Communication in which received and sent signals transmitted between both communication parties use different wavelengths in a same optical fiber may be referred to as single-fiber bidirectional communication. For the single-fiber bidirectional communication, to avoid interference in different directions in a same optical fiber, a received signal and a sent signal use different wavelengths.

FIG. 3 is a diagram of a point-to-point communication system based on single-fiber bidirectional communication. As shown in FIG. 3, a node 301 and a node 302 are connected by one optical fiber, a wavelength of an optical signal sent by the node 301 to the node 302 is $\lambda_A$, a wavelength of an optical signal sent by the node 302 to the node 301 is $\lambda_B$, and $\lambda_A \neq \lambda_B$.

FIG. 4 is a diagram of a point-to-multipoint communication system based on single-fiber bidirectional communication. As shown in FIG. 4, a node A may separately communicate with different nodes in n nodes through one optical fiber. A $k^{th}$ node in the n nodes may be referred to as a node Bk. n is a positive integer, and k is a positive integer from 1 to n. Therefore, as shown in FIG. 2, the n nodes may include a node B1 to a node Bn. Still referring to FIG. 4, the node A may be connected to a splitter 1 by an optical fiber 1, and the splitter 1 may be separately connected to different nodes in the n nodes by one optical fiber. The node A may send an optical signal to any one of the n nodes through the optical fiber 1, and receive a signal from any one of the n nodes. The optical signal sent by the node A first arrives at the splitter 1 through the optical fiber 1, then is distributed by the splitter 1 to n optical fibers connected to the n nodes, and then is received by the n nodes. Optical signals sent by the node A to different nodes in the n nodes may be distinguished in time domain and/or frequency domain. An optical signal sent by any one of the n nodes to the node A first arrives at the splitter 1 through an optical fiber between the node and the splitter 1, then is aggregated to the optical fiber 1 through the splitter 1, and then is received by the node A. A wavelength of an optical signal sent by the node A to the node Bk is $\lambda_{Ak}$, and a wavelength of an optical signal received by the node A from the node Bk is $\lambda_{Bk}$. For example, as shown in FIG. 4, a wavelength of an optical signal sent by the node A to the node B1 is $\lambda_{A1}$, a wavelength of an optical signal received by the node A from the node B1 is $\lambda_{B1}$, a wavelength of an optical signal sent by the node A to the node B2 is $\lambda_{A2}$, a wavelength of an optical signal received by the node A from the node B2 is $\lambda_{B2}$, a wavelength of an optical signal sent by the node A to the node Bn is $\lambda_{An}$, and a wavelength of an optical signal received by the node A from the node Bn is $\lambda_{Bn}$. $\lambda_{Ak} \neq \lambda_{Bk}$. Values of $\lambda_{Ak}$ and $\lambda_{A(k-1)}$ are not limited. Values of $\lambda_{Bk}$ and $\lambda_{B(k-1)}$ are not limited.

Compared with two-fiber bidirectional communication, single-fiber bidirectional communication can use only one optical fiber to complete work of two optical fibers, so that optical fiber resources can be greatly saved. Therefore, currently, single-fiber bidirectional communication is widely used in the field of optical communication.

However, in the conventional technology, because wavelengths of received and sent signals transmitted between both communication parties are different, two lasers of different wavelengths need to be used, resulting in an increase in costs of an optical module. How to reduce costs of a single-fiber bidirectional communication system is a problem that needs to be resolved.

To reduce costs of a single-fiber bidirectional communication system, embodiments of this application provide a single-fiber bidirectional communication method.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in descriptions of this application, unless otherwise specified, "a plurality of" means two or more than two. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms "for example" or "such as" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "for example" or "example" is intended to present a related concept in a specific manner to facilitate understanding.

First, a service scenario or a communication system to which the single-fiber bidirectional communication method provided in embodiments of this application is applied is described. This application may be applied to various optical communication scenarios, for example, may be applied to scenarios such as a passive optical network (passive optical network, PON), a passive optical local area network (passive optical LAN, POL), an industrial optical network, and an in-vehicle optical network.

In a possible implementation, the single-fiber bidirectional communication method provided in embodiments of this application may be applied to the communication system shown in FIG. 3 or FIG. 4. FIG. 3 is used as an example. A first node may be the node A, and a second node may be the node B. FIG. 4 is used as an example. A first node may be the node A, and a second node may be any one of the node B1 to the node Bn.

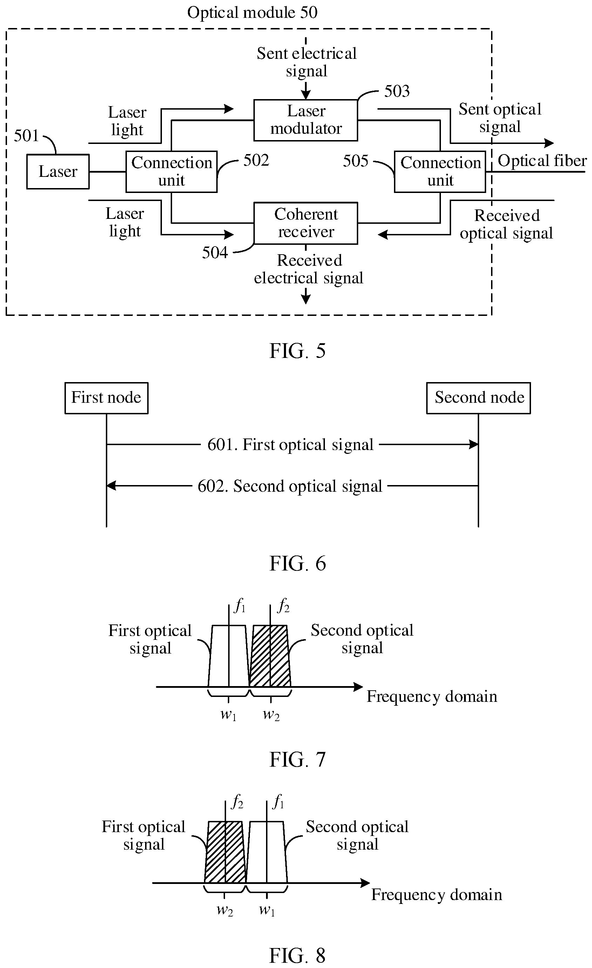

In an optical communication system, a node that performs optical communication may implement receiving and sending of optical signals through an optical module. FIG. 5 is a diagram of a structure of an optical module according to an embodiment of this application. As shown in FIG. 5, an optical module 50 may include a laser 501, a connection unit 502, a laser modulator 503, a coherent receiver 504, and a connection unit 505. The laser 501 may be connected to the laser modulator 503 and the coherent receiver 504 by the connection unit 502, and the laser modulator 503 and the coherent receiver 504 may be connected to a same optical fiber by the connection unit 505. Laser light emitted by the laser 501 may be separately input into the laser modulator 503 and the coherent receiver 504 through a splitter 502. A sent optical signal output by the laser modulator 503 may be transmitted to the optical fiber through the connection unit 505. A received optical signal from the optical fiber may be input into the coherent receiver 504 through the connection unit 505.

Optionally, the connection unit 502 may be an optical splitter or a splitter, and the connection unit 505 may be a coupler, a circulator, or a filter.

Optionally, the laser modulator 503 may include two input interfaces. As shown in FIG. 5, a sent electrical signal and the laser light emitted by the laser 501 are inputs of the laser modulator 503. After the sent electrical signal and the laser light emitted by the laser 501 are input into the laser modulator 503, the laser modulator 503 may modulate the sent electrical signal onto an amplitude of the laser light emitted by the laser, to output the sent optical signal.

Optionally, the laser modulator 503 may be an intensity modulator. For example, the modulator may be a Mach-Zehnder modulator (Mach-Zehnder modulator, MZM), an electro absorption modulator (electro absorption modulator, EAM), or the like.

Optionally, the coherent receiver 504 may include two input interfaces. As shown in FIG. 5, the received optical signal and the laser light emitted by the laser 501 are inputs of the coherent receiver 504. After the received optical signal and the laser light emitted by the laser 501 are input into the coherent receiver 504, the two beams of light undergo interference and superimposition in the coherent receiver 504, and then are converted by a photodetector to output a received electrical signal.

In embodiments of this application, the laser light emitted by the laser 501 may be used as local oscillator laser light of the coherent receiver 504, and the received optical signal from the optical fiber may be used as received signal light of the coherent receiver 504, which are uniformly described herein.

Optionally, the coherent receiver 504 may be a heterodyne coherent receiver or an intradyne coherent receiver. The heterodyne coherent receiver may include a single-polarization heterodyne coherent receiver and a dual-polarization heterodyne coherent receiver, and the intradyne coherent receiver may include a single-polarization intradyne coherent receiver and a dual-polarization intradyne coherent receiver. The single-polarization heterodyne coherent receiver and the single-polarization intradyne coherent receiver are applicable to a scenario in which a received optical signal is single-polarized light, and the dual-polarization heterodyne coherent receiver and the dual-polarization intradyne coherent receiver are applicable to a scenario in which a received optical signal is dual-polarized light.

In embodiments of this application, a first node may communicate with a second node through a first optical module. The first optical module may include a first laser, a first connection unit, a first coherent receiver, a first laser modulator, and a second connection unit. Optionally, a structure of the first optical module may be similar to that of the optical module shown in FIG. 5. For example, the first laser may be the laser 501, the first connection unit may be the connection unit 502, the first laser modulator may be the laser modulator 503, the first coherent receiver may be the coherent receiver 504, and the second connection unit may be the connection unit 505. The second node may communicate with the first node through a second optical module. The second optical module may include a second laser, a third connection unit, a second coherent receiver, a second laser modulator, and a fourth connection unit. Optionally, a structure of the second optical module may be similar to that of the optical module shown in FIG. 5. For example, the second laser may be the laser 501, the third connection unit may be the connection unit 502, the second laser modulator may be the laser modulator 503, the second coherent receiver may be the coherent receiver 504, and the fourth connection unit may be the connection unit 505.

The following describes in detail a specific implementation of the single-fiber bidirectional communication method provided in embodiments with reference to the accompanying drawings.

FIG. 6 is a flowchart of a single-fiber bidirectional communication method according to this application. In the method, a first node may communicate with a second node through a first optical module, and the second node may communicate with the first node through a second optical module. The first optical module and the second optical module may be as described above.

Referring to FIG. 6, the single-fiber bidirectional communication method provided in this embodiment includes the following steps 601 and 602.

Step 601: The first node sends a first optical signal to the second node through a first laser modulator, and correspondingly, the second node receives the first optical signal through a second coherent receiver.

The first optical signal may be obtained by modulating, by the first laser modulator, laser light emitted by a first laser. In a possible implementation, the first laser modulator may receive, through a first connection unit, the laser light emitted by the first laser. Then, the first laser modulator may perform modulation based on a first electrical signal and the laser light emitted by the first laser, to obtain the first optical signal.

Optionally, the first optical signal sent by the first laser modulator may be transmitted to an optical fiber through a second connection unit, and then sent to the second node through the optical fiber.

When the second node receives the first optical signal through the second coherent receiver, laser light emitted by a second laser may be used as local oscillator light of the second coherent receiver. In a possible implementation, the second coherent receiver may receive the first optical signal from the optical fiber through a fourth connection unit, and may receive, through a third connection unit, the laser light emitted by the second laser. Then, the second coherent receiver may perform processing based on the first optical signal and the laser light emitted by the second laser, to obtain the first electrical signal.

Step 602: The second node sends a second optical signal to the first node through a second laser modulator, and correspondingly, the first node receives the second optical signal from the second node through a first coherent receiver.

The second optical signal may be obtained by modulating, by the second laser modulator, the laser light emitted by the second laser. In a possible implementation, the second laser modulator may receive, through the third connection unit, the laser light emitted by the second laser. Then, the second laser modulator may perform modulation based on a second electrical signal and the laser light emitted by the first laser, to obtain the second optical signal.

Optionally, the second optical signal sent by the second laser modulator may be transmitted to an optical fiber through the fourth connection unit, and then sent to the first node through the optical fiber.

When the first node receives the second optical signal through the first coherent receiver, the laser light emitted by the first laser may be used as local oscillator light of the first coherent receiver. In a possible implementation, the first coherent receiver may receive the second optical signal from the optical fiber through the second connection unit, and may receive, through the first connection unit, the laser light emitted by the first laser. Then, the first coherent receiver may perform processing based on the second optical signal and the laser light emitted by the first laser, to obtain the second electrical signal.

Based on the single-fiber bidirectional communication method in step 601 and step 602, the first node may implement functions of sending the first optical signal and receiving the second optical signal through the first laser, and the second node may implement functions of sending the second optical signal and receiving the first optical signal through the second laser. In this solution, each of the first node and the second node needs to use only one laser. This solution can effectively reduce costs of optical communication.

Optionally, a center frequency of the first optical signal may be $f_1$, a center frequency of the second optical signal may be $f_2$, $f_1$ is different from $f_2$, and $|f_1 - f_2|$ is less than a first threshold. It should be understood that $f_1$ is different from $f_2$, so that interference can be small when the first optical signal and the second optical signal are transmitted on a same optical fiber. If $|f_1 - f_2|$ is less than the first threshold, it can be ensured that the first node and the second node each can use one laser to implement functions of receiving and sending signals. If a difference between $f_1$ and $f_2$ is greater than the first threshold, a frequency range of the second optical signal exceeds a receiving frequency range of the first coherent receiver, and the first node cannot correctly receive the second optical signal through the first coherent receiver; and a frequency range of the first optical signal exceeds a receiving frequency range of the second coherent receiver, and the second node cannot correctly receive the first optical signal through the second coherent receiver.

Optionally, a value relationship between the center frequency $f_1$ of the first optical signal and the center frequency $f_2$ of the second optical signal may not be limited, and $f_1 < f_2$, or $f_2 < f_1$.

Optionally, the first threshold is related to modulation frequency ranges of the first laser modulator and the second laser modulator and the receiving frequency ranges of the first coherent receiver and the second coherent receiver.

Optionally, the first optical signal and the second optical signal may be single-wavelength signals, or may be signals including a plurality of sub-wavelengths. This is not limited in this application.

Optionally, each of the first optical signal and the second optical signal has a specific bandwidth, and occupies a continuous frequency range. A maximum frequency band width of the first optical signal may be $w_1$, and a maximum frequency band width of the second optical signal may be $w_2$.

Optionally, the frequency range of the first optical signal and the frequency range of the second optical signal do not overlap or partially overlap. In a possible implementation, $|f_1 - f_2| \geq \dfrac{w_1}{2}$, and $|f_1 - f_2| \geq \dfrac{w_2}{2}$. It is required that $f_1$ and $f_2$ satisfy $|f_1 - f_2| \geq \dfrac{w_1}{2}$, and

$$|f_1 - f_2| \geq \frac{w_2}{2}$$

, so that it can be ensured that interference between the first optical signal and the second optical signal is small, and bidirectional communication is not affected. When the frequency range of the first optical signal and the frequency range of the second optical signal do not overlap, the first optical signal and the second optical signal do not interfere with each other.

Optionally, when the frequency range of the first optical signal and the frequency range of the second optical signal do not overlap, if the frequency range of the first optical signal is closer to the frequency range of the second optical signal, modulation bandwidths that need to be configured for the first laser modulator and the second laser modulator are smaller, and receiving bandwidths that need to be configured for the first coherent receiver and the second coherent receiver are smaller. In a possible implementation, the frequency range of the first optical signal and the frequency range of the second optical signal are continuous in time domain.

For example, $f_1 < f_2$, and the frequency range of the first optical signal and the frequency range of the second optical signal are continuous in time domain. FIG. 7 is a diagram of the first optical signal and the second optical signal.

For example, $f_2 < f_1$, and the frequency range of the first optical signal and the frequency range of the second optical signal are continuous in time domain. FIG. 8 is another diagram of the first optical signal and the second optical signal.

Optionally, if an output frequency of the first laser is $f_3$, $f_1 - \frac{w_1}{2} < f_3 < f_2 + \frac{w_2}{2}$, or $f_2 - \frac{w_2}{2} < f_3 < f_1 + \frac{w_1}{2}$. $f_1 - \frac{w_1}{2}$ or $f_2 - \frac{w_2}{2}$ is a minimum frequency value in the frequency range occupied by the first optical signal and the second optical signal, and $f_2 + \frac{w_2}{2}$ or $f_1 + \frac{w_1}{2}$ is a maximum frequency value in the frequency range occupied by the first optical signal and the second optical signal. In other words, the output frequency of the first laser is between the minimum frequency value in the frequency range occupied by the first optical signal and the second optical signal and the maximum frequency value in the frequency range occupied by the first optical signal and the second optical signal. It should be understood that if the output frequency of the first laser meets the foregoing requirement, a bandwidth requirement for the first laser modulator and the first coherent receiver can be reduced.

For example, the diagram of the first optical signal and the second optical signal shown in FIG. 7 is used as an example. When $f_1 - \frac{w_1}{2} < f_3 < f_2 + \frac{w_2}{2}$, the output frequency of the first laser falls within the frequency range of the first optical signal and the second optical signal. The diagram of the first optical signal and the second optical signal shown in FIG. 8 is used as an example. When $f_2 - \frac{w_2}{2} < f_3 < f_1 + \frac{w_1}{2}$, the output frequency of the first laser falls within the frequency range of the first optical signal and the second optical signal. If the output frequency of the first laser falls within the frequency range of the first optical signal and the second optical signal, when the first laser modulator modulates the first optical signal based on the laser light emitted by the first laser and the first coherent receiver coherently receives the second optical signal based on the laser light emitted by the first laser, a required bandwidth range is small. Still referring to FIG. 7 and FIG. 8, if the output frequency of the first laser is outside the frequency range of the first optical signal and the second optical signal, a bandwidth range required by the first laser modulator and the first coherent receiver is expanded.

Optionally, if an output frequency of the second laser is $f_4$, $f_1 - \frac{w_1}{2} < f_4 < f_2 + \frac{w_2}{2}$, or $f_2 - \frac{w_2}{2} < f_4 < f_1 + \frac{w_1}{2}$. In other words, the output frequency of the second laser is between the minimum frequency value in the frequency range occupied by the first optical signal and the second optical signal and the maximum frequency value in the frequency range occupied by the first optical signal and the second optical signal. It should be understood that if the output frequency of the second laser meets the foregoing requirement, a bandwidth requirement for the second laser modulator and the second coherent receiver can be reduced.

For example, the diagram of the first optical signal and the second optical signal shown in FIG. 7 is used as an example. When $f_1 - \frac{w_1}{2} < f_4 < f_2 + \frac{w_2}{2}$, the output frequency of the second laser falls within the frequency range of the first optical signal and the second optical signal. The diagram of the first optical signal and the second optical signal shown in FIG. 8 is used as an example. When $f_2 - \frac{w_2}{2} < f_4 < f_1 + \frac{w_1}{2}$, the output frequency of the second laser falls within the frequency range of the first optical signal and the second optical signal. If the output frequency of the second laser falls within the frequency range of the first optical signal and the second optical signal, when the second laser modulator modulates the second optical signal based on the laser light emitted by the second laser and the second coherent receiver coherently receives the first optical signal based on the laser light emitted by the second laser, a required bandwidth range is small. Still referring to FIG. 7 and FIG.

8, if the output frequency of the second laser is outside the frequency range of the first optical signal and the second optical signal, a bandwidth range required by the second laser modulator and the second coherent receiver is expanded.

In a possible implementation, $f_3$ may be equal to $f_1$, and $f_4$ may be equal to $f_2$.

Optionally, if the output frequency of the first laser is $f_3$, a frequency range of receiving the second optical signal by the first coherent receiver is ($f_3 - \Delta x$) to $f_3$ and $f_3$ to ($f_3 + \Delta x$), and $\Delta x \geq |f_3 - f_2| + \frac{w_2}{2}$. Based on this configuration method, the frequency range occupied by the second optical signal is within the receiving frequency range of the first coherent receiver, to ensure that the first coherent receiver can receive the second optical signal.

Optionally, if the output frequency of the second laser is $f_4$, a frequency range of receiving the first optical signal by the second coherent receiver is ($f_4 - \Delta y$) to $f_4$ and $f_4$ to ($f_4 + \Delta y$), and $\Delta y \geq |f_4 - f_1| + \frac{w_1}{2}$. Based on this configuration method, the frequency range occupied by the first optical signal is within the receiving frequency range of the second coherent receiver, to ensure that the second coherent receiver can receive the first optical signal.

Optionally, based on the single-fiber bidirectional communication method provided in this application, the first node and the second node may further adjust the first optical signal and/or the second optical signal through signaling exchange. The adjustment performed on the first optical signal and/or the second optical signal includes center frequency adjustment and/or bandwidth adjustment.

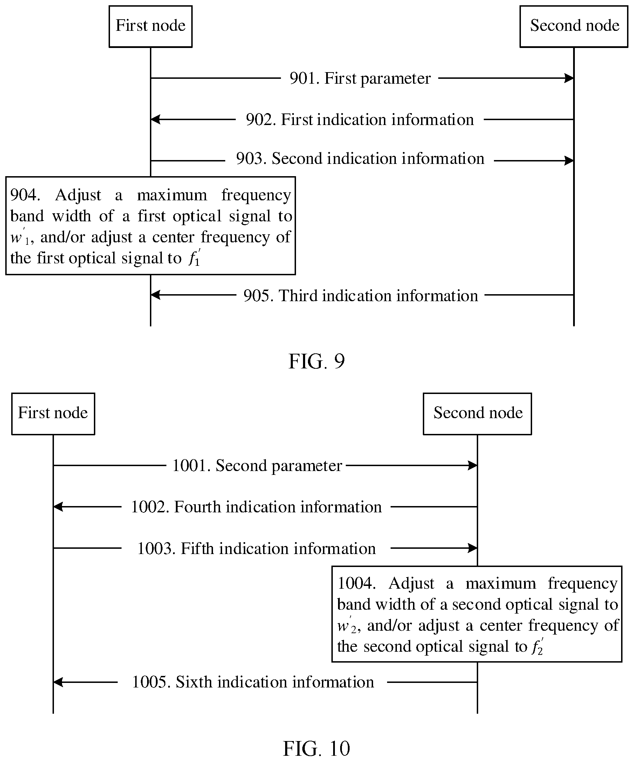

The adjustment of the first optical signal is used as an example. FIG. 9 is a flowchart of another single-fiber bidirectional communication method according to this application. As shown in FIG. 9, the single-fiber bidirectional communication method provided in this application may include step 901 to step 905.

Step 901: A first node sends, to a second node, a first parameter for adjusting a first optical signal, and correspondingly, the second node receives the first parameter from the first node.

Optionally, if a center frequency of the first optical signal needs to be adjusted, the first parameter may be a parameter related to adjustment of the center frequency of the first optical signal. In an implementation, the first parameter may be an adjusted center frequency $f_1'$ of the first optical signal.

Optionally, when the center frequency of the first optical signal is adjusted and a bandwidth of the first optical signal is not adjusted, $|f_1' - f_2| \geq \frac{w_1}{2}$, and

$|f_1' - f_2| \geq \frac{w_2}{2}$.

Optionally, if the bandwidth of the first optical signal needs to be adjusted, the first parameter may be a parameter related to adjustment of the bandwidth of the first optical signal. In an implementation, the first parameter may be an adjusted maximum frequency band width $w_1'$ occupied by the first optical signal, or the first parameter is a difference $\Delta w_1$ between the adjusted maximum frequency band width occupied by the first optical signal and a maximum frequency band width occupied by the first optical signal before the adjustment, where $\Delta w_1 = w_1' - w_1$.

Optionally, when the center frequency of the first optical signal is not adjusted and the bandwidth of the first optical signal is adjusted, $|f_1 - f_2| \geq \frac{w_1'}{2}$ and

$|f_1 - f_2| \geq \frac{w_2}{2}$.

Optionally, if both the bandwidth and the center frequency of the first optical signal need to be adjusted, the first parameter may be a parameter related to adjustment of the center frequency and the bandwidth of the first optical signal. In an implementation, the first parameter may include $w_1'$ and $f_1'$, or $\Delta w_1$ and $f_1'$.

Optionally, when both the center frequency and the bandwidth of the first optical signal are adjusted,

$|f_1' - f_2| \geq \frac{w_1'}{2}$, and $|f_1' - f_2| \geq \frac{w_2}{2}$.

Step 902: The second node sends first indication information to the first node, and correspondingly, the first node receives the first indication information from the second node. The first indication information indicates that the second node agrees to adjust the first optical signal based on the first parameter.

Optionally, if an adjusted frequency range of the first optical signal indicated by the first parameter does not exceed a maximum frequency range of receiving supported by a second coherent receiver, the second node may send the first indication information to the first node.

After receiving the first indication information from the second node, the first node determines that the first optical signal can be adjusted, and then performs subsequent steps 903 to 905.

Step 903: The first node sends second indication information to the second node, and correspondingly, the second node receives the second indication information from the first node. The second indication information indicates that the first node starts to adjust the first optical signal.

After receiving the second indication information, the second node may learn that the first node starts to adjust the first optical signal. In this case, the second node is in a waiting state until learning that the first node has completed adjustment. In the waiting state, the second node does not send a signal to the first node.

Step 904: The first node adjusts the maximum frequency band width of the first optical signal to $w_1'$, and/or adjusts the center frequency of the first optical signal to $f_1'$.

Optionally, if the first parameter is $f_1'$, the first node may adjust the center frequency of the first optical signal to $f_1'$.

Optionally, if the first parameter is $w_1'$ or $\Delta w_1$, the first node may adjust the maximum frequency band width of the first optical signal to $w_1'$.

Optionally, if the first parameter includes $w_1'$ and $f_1'$, or $\Delta w_1$ and $f_1'$, the first node may adjust the maximum frequency band width of the first optical signal to $w_1'$, and adjust the center frequency of the first optical signal to $f_1'$.

Step 905: The first node sends third indication information to the second node, and correspondingly, the second node receives the third indication information from the first node. The third indication information indicates that the first node has completed adjustment of the first optical signal.

After receiving the third indication information, the second node ends the waiting state.

Optionally, after the second node receives the third indication information, the second node may further adaptively adjust a receiving frequency range of the second coherent receiver based on the first parameter, and determine that an adjusted first optical signal can be received.

In a possible implementation, when the center frequency of the first optical signal remains unchanged and the maximum frequency band width is adjusted to $w_1'$, if an output frequency of a second laser is $f_4$, a frequency range of receiving the adjusted first optical signal by the second coherent receiver is ($f_4$ - $\Delta a$) to $f_4$ and $f_4$ to ($f_4$ + $\Delta a$), where $\Delta a \geq |f_4 - f_1| + \frac{w_1'}{2}$.

In a possible implementation, when the adjusted center frequency of the first optical signal is adjusted to $f_1'$ and the maximum frequency band width remains unchanged, if the output frequency of the second laser is $f_4$, a frequency range of receiving the adjusted first optical signal by the second coherent receiver is ($f_4$ - $\Delta b$) to $f_4$ and $f_4$ to ($f_4$ + $\Delta b$), where $\Delta b \geq |f_4 - f_1'| + \frac{w_1}{2}$.

In a possible implementation, when the adjusted center frequency of the first optical signal is adjusted to $f_1'$ and the maximum frequency band width is adjusted to $w_1'$, if the output frequency of the second laser is $f_4$, a frequency range of receiving the adjusted first optical signal by the second coherent receiver is ($f_4$ - $\Delta c$) to $f_4$ and $f_4$ to ($f_4$ + $\Delta c$), where $\Delta c \geq |f_4 - f_1'| + \frac{w_1'}{2}$.

The adjustment of the second optical signal is used as an example. FIG. 10 is a flowchart of still another single-fiber bidirectional communication method according to this application. As shown in FIG. 10, the single-fiber bidirectional communication method provided in this application may include step 1001 to step 1005.

Step 1001: A first node sends, to a second node, a second parameter for adjusting a second optical signal, and correspondingly, the second node receives the second parameter from the first node.

Optionally, if a center frequency of the second optical signal needs to be adjusted, the second parameter may be a parameter related to adjustment of the center frequency of the second optical signal. In an implementation, the second parameter may be an adjusted center frequency $f_2'$ of the second optical signal.

Optionally, when the center frequency of the second optical signal is adjusted and a bandwidth of the second optical signal is not adjusted, $|f_1 - f_2'| \geq \frac{w_1}{2}$, and $|f_1 - f_2'| \geq \frac{w_2}{2}$.

Optionally, if the bandwidth of the second optical signal needs to be adjusted, the second parameter may be a parameter related to adjustment of the bandwidth of the second optical signal. In an implementation, the second parameter may be an adjusted maximum frequency band width $w_2'$ occupied by the second optical signal, or the second parameter is a difference $\Delta w_2$ between the adjusted maximum frequency band width occupied by the second optical signal and a maximum frequency band width occupied by the second optical signal before the adjustment, where $\Delta w_2 = w_2' - w_2$.

Optionally, when the center frequency of the second optical signal is not adjusted and the bandwidth of the second optical signal is adjusted, $|f_1 - f_2| \geq \frac{w_1}{2}$, and $|f_1 - f_2| \geq \frac{w_2'}{2}$.

Optionally, if both the bandwidth and the center frequency of the second optical signal need to be adjusted, the second parameter may be a parameter related to adjustment of the center frequency and the bandwidth of the second optical signal. In an implementation, the second parameter may include $w_2'$ and/or

$f_2'$ , or $\Delta w_2$ and/or $f_2'$ .

Optionally, when both the center frequency and the bandwidth of the second optical signal are adjusted,

$$|f_1 - f_2'| \geq \frac{w_1}{2}$$ , and $$|f_1 - f_2'| \geq \frac{w_2'}{2}$$ .

Step 1002: The second node sends fourth indication information to the first node, and correspondingly, the first node receives the fourth indication information from the second node. The fourth indication information indicates that the second node agrees to adjust the second optical signal based on the second parameter.

Optionally, if an adjusted frequency range of the second optical signal indicated by the second parameter does not exceed a maximum frequency range of modulation supported by a second laser modulator, the second node sends the fourth indication information to the first node.

After receiving the fourth indication information from the second node, the first node determines that the second optical signal can be adjusted, and then performs subsequent steps 1003 to 1005.

Step 1003: The first node sends fifth indication information to the second node, and correspondingly, the second node receives the fifth indication information from the first node. The fifth indication information indicates the second node to start to adjust the second optical signal.

The second node may start to adjust the second optical signal based on an indication of the fifth indication information.

After sending the fifth indication information, the first node is in a waiting state until learning that the second node has completed adjustment. In the waiting state, the first node does not send a signal to the second node.

Step 1004: The second node adjusts the maximum frequency band width of the second optical signal to $w_2'$ , and/or adjusts the center frequency of the second optical signal to $f_2'$ .

Optionally, if the second parameter is $f_2'$ , the first node may adjust the center frequency of the second optical signal to $f_2'$ .

Optionally, if the second parameter is $w_2'$ or $\Delta w_2$, the first node may adjust the maximum frequency band width of the second optical signal to $w_2'$ .

Optionally, if the second parameter includes $w_2'$ and $f_2'$ , or $\Delta w_2$ and $f_2'$ , the first node may adjust the maximum frequency band width of the second optical signal to $w_2'$ , and adjust the center frequency of the second optical signal to $f_2'$ .

Step 1005: The second node sends sixth indication information to the first node, and correspondingly, the first node receives the sixth indication information from the second node. The sixth indication information indicates that the second node has completed adjustment of the second optical signal.

After receiving the sixth indication information, the first node ends the waiting state.

Optionally, after the first node receives the sixth indication information, the first node may further adaptively adjust a receiving frequency range of a first coherent receiver based on the second parameter, and determine that an adjusted second optical signal can be received.

In a possible implementation, when the adjusted center frequency of the second optical signal remains unchanged and the maximum frequency band width is adjusted to $w_2'$ , if an output frequency of a first laser is $f_3$, a frequency range of receiving the adjusted second optical signal by the first coherent receiver is ($f_3$ - $\Delta d$) to $f_3$ and $f_3$ to ($f_3 + \Delta d$), where $\Delta d \geq |f_3 - f_2| + \frac{w_2'}{2}$ .

In a possible implementation, when the adjusted center frequency of the second optical signal is adjusted to $f_2'$ and the maximum frequency band width remains unchanged, if the output frequency of the first laser is $f_3$, a frequency range of receiving the adjusted second optical signal by the first coherent receiver is ($f_3$ - $\Delta e$) to $f_3$ and $f_3$ to ($f_3 + \Delta e$), where $\Delta e \geq |f_3 - f_2'| + \frac{w_2}{2}$ .

In a possible implementation, when the adjusted center frequency of the second optical signal is adjusted to $f_2'$ and the maximum frequency band width is adjusted to $w_2'$ , if the output frequency of the first laser is $f_3$, a frequency range of receiving the adjusted second optical signal by the first coherent receiver is ($f_3$ - $\Delta f$) to $f_3$ and $f_3$ to ($f_3 + \Delta f$), where $\Delta f \geq |f_3 - f_2'| + \frac{w_2'}{2}$ .

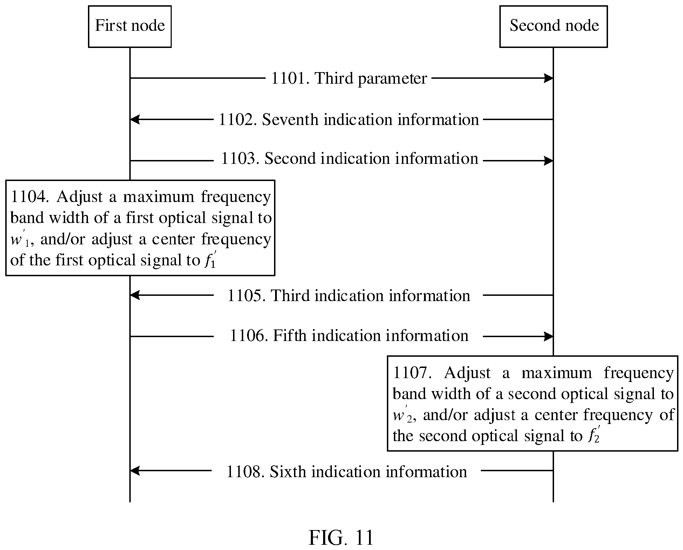

The adjustment of the first optical signal and the second optical signal is used as an example. FIG. 11 is a flowchart of still another single-fiber bidirectional communication method according to this application. As shown in FIG. 11, the single-fiber bidirectional communication method provided in this application may include step 1101 to step 1108.

Step 1101: A first node sends, to a second node, a third parameter for adjusting a first optical signal and a second optical signal, and correspondingly, the second node receives the third parameter from the first node.

Optionally, if a center frequency of the first optical signal and a center frequency of the second optical signal need to be adjusted, the third parameter may be a parameter related to adjustment of the center frequency of the first optical signal and adjustment of the center frequency of the second optical signal. In an implementation, the third parameter may include $f_1'$ and $f_2'$.

Optionally, when the center frequency of the first optical signal and the center frequency of the second optical signal are adjusted, $|f_1' - f_2'| \geq \frac{w_1}{2}$, and $|f_1' - f_2'| \geq \frac{w_2}{2}$.

Optionally, if a bandwidth of the first optical signal and a bandwidth of the second optical signal need to be adjusted, the third parameter may be a parameter related to adjustment of the bandwidth of the first optical signal and adjustment of the bandwidth of the second optical signal. In an implementation, the third parameter may include $w_1'$ and $w_2'$, or $\Delta w_1$ and $\Delta w_2$, or $w_1'$ and $\Delta w_2$, or $\Delta w_1$ and $w_2'$.

Optionally, when the bandwidth of the first optical signal and the bandwidth of the second optical signal are adjusted, $|f_1 - f_2| \geq \frac{w_1'}{2}$, and $|f_1 - f_2| \geq \frac{w_2'}{2}$.

Optionally, if the bandwidth of the first optical signal and the center frequency of the second optical signal need to be adjusted, the third parameter may be a parameter related to adjustment of the bandwidth of the first optical signal and adjustment of the center frequency of the second optical signal. In an implementation, the third parameter may include $w_1'$ and $f_2'$, or $\Delta w_1$ and $f_2'$.

Optionally, when the bandwidth of the first optical signal and the center frequency of the second optical signal are adjusted, $|f_1 - f_2'| \geq \frac{w_1'}{2}$, and $|f_1 - f_2'| \geq \frac{w_2}{2}$.

Optionally, if the bandwidth of the first optical signal, the center frequency of the first optical signal, and the center frequency of the second optical signal need to be adjusted, the third parameter may be a parameter related to adjustment of the bandwidth of the first optical signal, adjustment of the center frequency of the first optical signal, and adjustment of the center frequency of the second optical signal. In an implementation, the third parameter may include $w_1'$, $f_1'$, and $f_2'$, or $\Delta w_1$, $f_1'$, and $f_2'$.

Optionally, when the bandwidth of the first optical signal, the center frequency of the first optical signal,

and the center frequency of the second optical signal are adjusted, $|f_1' - f_2'| \geq \frac{w_1'}{2}$, and $|f_1' - f_2'| \geq \frac{w_2}{2}$.

Optionally, if the bandwidth of the second optical signal and the center frequency of the first optical signal need to be adjusted, the third parameter may be a parameter related to adjustment of the bandwidth of the second optical signal and adjustment of the center frequency of the first optical signal. In an implementation, the third parameter may include $w_2'$ and $f_1'$, or $\Delta w_2$ and $f_1'$.

Optionally, when the bandwidth of the second optical signal and the center frequency of the first optical signal are adjusted, $|f_1' - f_2| \geq \frac{w_1}{2}$, and $|f_1' - f_2| \geq \frac{w_2'}{2}$.

Optionally, if the bandwidth of the second optical signal, the center frequency of the second optical signal, and the center frequency of the first optical signal need to be adjusted, the third parameter may be a parameter related to adjustment of the bandwidth of the second optical signal, adjustment of the center frequency of the second optical signal, and adjustment of the center frequency of the first optical signal. In an implementation, the third parameter may include $w_2'$, $f_2'$, and $f_1'$, or $\Delta w_2$, $f_2'$, and $f_1'$.

Optionally, when the bandwidth of the second optical signal, the center frequency of the second optical signal, and the center frequency of the first optical signal are adjusted, $|f_1' - f_2'| \geq \frac{w_1}{2}$, and $|f_1' - f_2'| \geq \frac{w_2'}{2}$.

Step 1102: The second node sends seventh indication information to the first node, and correspondingly, the first node receives the seventh indication information from the second node. The seventh indication information indicates that the second node agrees to adjust the first optical signal and the second optical signal based on the third parameter.

Optionally, if an adjusted frequency range of the first optical signal indicated by the third parameter does not exceed a maximum frequency range of receiving supported by a second coherent receiver and an adjusted frequency range of the second optical signal does not exceed a maximum frequency range of modulation supported by a second laser modulator, the second node may send the seventh indication information to the first node.

After receiving the seventh indication information from the second node, the first node determines that the first optical signal and the second optical signal can be adjusted, and then performs subsequent steps 1103 to 1108.

Step 1103: The first node sends second indication information to the second node, and correspondingly, the second node receives the second indication information from the first node. The second indication information indicates that the first node starts to adjust the first optical signal.

For step 1103, refer to related descriptions in step 903. Details are not described herein again.

Step 1104: The first node adjusts a maximum frequency band width of the first optical signal to $w_1'$, and/or adjusts the center frequency of the first optical signal to $f_1'$.

Optionally, if the third parameter includes $f_1'$, the first node may adjust the center frequency of the first optical signal to $f_1'$.

Optionally, if the third parameter includes $w_1'$ or $\Delta w_1$, the first node may adjust the maximum frequency band width of the first optical signal to $w_1'$.

Optionally, if the third parameter includes $w_1'$ and $f_1'$, or $\Delta w_1$ and $f_1'$, the first node may adjust the maximum frequency band width of the first optical signal to $w_1'$, and adjust the center frequency of the first optical signal to $f_1'$.

Step 1105: The first node sends third indication information to the second node, and correspondingly, the second node receives the third indication information from the first node. The third indication information indicates that the first node has completed adjustment of the first optical signal.

For step 1105, refer to related descriptions in step 905. Details are not described herein again.

Step 1106: The first node sends fifth indication information to the second node, and correspondingly, the second node receives the fifth indication information from the first node. The fifth indication information indicates the second node to start to adjust the second optical signal.

For step 1106, refer to related descriptions in step 1003. Details are not described herein again.

Step 1107: The second node adjusts a maximum frequency band width of the second optical signal to $w_2'$, and/or adjusts the center frequency of the second optical signal to $f_2'$.

Optionally, if the third parameter includes $f_2'$, the second node may adjust the center frequency of the second optical signal to $f_2'$.

Optionally, if the third parameter includes $w_2'$ or $\Delta w_2$, the second node may adjust the maximum frequency band width of the second optical signal to $w_2'$.

Optionally, if the third parameter includes $w_2'$ and $f_2'$, or $\Delta w_2$ and $f_2'$, the second node may adjust the maximum frequency band width of the second optical signal to $w_2'$, and adjust the center frequency of the first optical signal to $f_2'$.

Step 1108: The second node sends sixth indication information to the first node, and correspondingly, the first node receives the sixth indication information from the second node. The sixth indication information indicates that the second node has completed adjustment of the second optical signal.

For step 1108, refer to related descriptions in step 1005. Details are not described herein again.

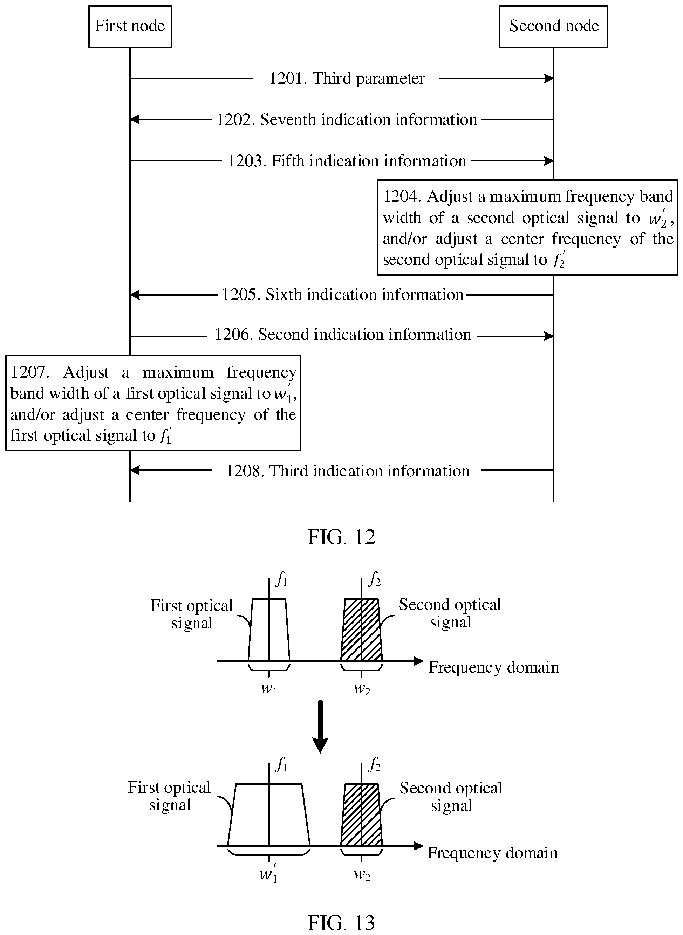

The adjustment of the first optical signal and the second optical signal continues to be used as an example. FIG. 12 is a flowchart of still another single-fiber bidirectional communication method according to this application. As shown in FIG. 12, the single-fiber bidirectional communication method provided in this application may include step 1201 to step 1208.

Step 1201: A first node sends, to a second node, a third parameter for adjusting a first optical signal and a second optical signal, and correspondingly, the second node receives the third parameter from the first node.

For step 1201, refer to related descriptions in step 1101. Details are not described herein again.

Step 1202: The second node sends seventh indication information to the first node, and correspondingly, the first node receives the seventh indication information from the second node. The seventh indication information indicates that the second node agrees to adjust the first optical signal and the second optical signal based on the third parameter.

For step 1202, refer to related descriptions in step 1102. Details are not described herein again.

Step 1203: The first node sends fifth indication information to the second node, and correspondingly, the second node receives the fifth indication information from the first node. The fifth indication information indicates the second node to start to adjust the second optical signal.

For step 1203, refer to related descriptions in step 1106. Details are not described herein again.

Step 1204: The second node adjusts a maximum frequency band width of the second optical signal to $w_2'$, and/or adjusts the center frequency of the second optical signal to $f_2'$.

For step 1204, refer to related descriptions in step 1107. Details are not described herein again.

Step 1205: The second node sends sixth indication information to the first node, and correspondingly, the first node receives the sixth indication information from the second node. The sixth indication information indicates that the second node has completed adjustment of the second optical signal.

For step 1205, refer to related descriptions in step 1108. Details are not described herein again.

Step 1206: The first node sends second indication information to the second node, and correspondingly, the second node receives the second indication information from the first node. The second indication information indicates that the first node starts to adjust the first optical signal.

For step 1206, refer to related descriptions in step 1103. Details are not described herein again.

Step 1207: The first node adjusts a maximum frequency band width of the first optical signal to $w_1'$, and/or adjusts the center frequency of the first optical signal to $f_1'$.

For step 1207, refer to related descriptions in step 1104. Details are not described herein again.

Step 1208: The first node sends third indication information to the second node, and correspondingly, the second node receives the third indication information from the first node. The third indication information indicates that the first node has completed adjustment of the first optical signal.

For step 1208, refer to related descriptions in step 1105. Details are not described herein again.

According to the single-fiber bidirectional communication methods corresponding to FIG. 9 to FIG. 12, adjustment of the first optical signal and/or the second optical signal transmitted between the first node and the second node can be implemented.

Optionally, in the embodiments corresponding to FIG. 9 to FIG. 12, $w_1 < w_1'$, or $w_1 > w_1'$. $w_2 < w_2'$, or $w_2 > w_2'$. In other words, the modulating the bandwidth of the first optical signal may be increasing the bandwidth of the first optical signal, or may be decreasing the bandwidth of the first optical signal. The modulating the bandwidth of the second optical signal may be increasing the bandwidth of the second optical signal, or may be decreasing the bandwidth of the second optical signal.

The increasing the bandwidth of the optical signal may be understood as expanding a communication bandwidth. The methods in the embodiments corresponding to FIG. 9 to FIG. 12 may be used to expand a bandwidth in single-fiber bidirectional communication. In the conventional technology, if a communication bandwidth in optical communication needs to be expanded, an optical module generally needs to be additionally added to add an optical signal, thereby increasing the communication bandwidth. However, based on the solution in embodiments of this application, both communication parties may increase a bandwidth of an optical signal by configuring an optical module, so that a communication bandwidth can be increased. This method does not need to be implemented by introducing an additional component, so that costs can be reduced.

In a possible implementation, when bandwidth expansion needs to be performed on the first optical signal, if $|f_1 - f_2| \geq \frac{w_1'}{2}$, the bandwidth of the first optical signal may be directly adjusted, and the center frequencies of the first optical signal and the second optical signal do not need to be adjusted. For example, FIG. 13 is a diagram of expanding the first optical signal. As shown in FIG. 13, the center frequencies of the first optical signal and the second optical signal do not need to be adjusted, and the maximum frequency band width of the first optical signal is directly expanded from $w_1$ to $w_1'$.

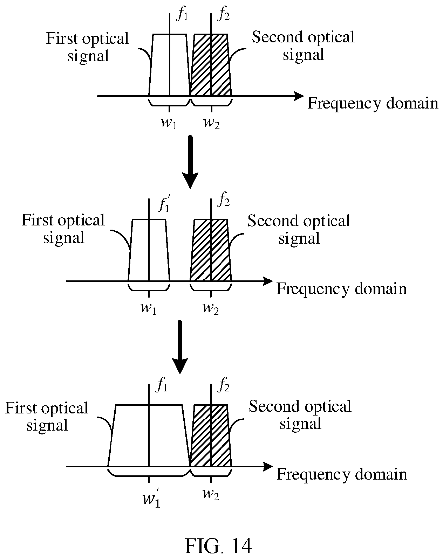

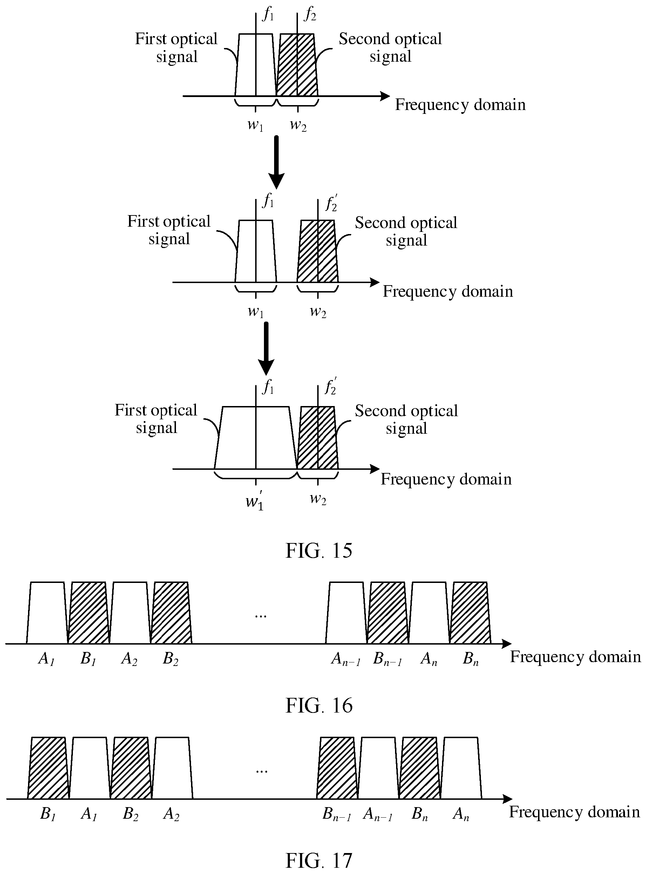

In a possible implementation, when bandwidth expansion needs to be performed on the first optical signal, if $|f_1 - f_2| < \frac{w_1'}{2}$, the first node may further determine that the center frequency of the first optical signal and/or the center frequency of the second optical signal need to be adjusted. For example, FIG. 14 is another diagram of expanding the first optical signal. As shown in FIG. 14, the center frequency of the first optical signal may be first adjusted to $f_1'$, so that $|f_1' - f_2| \geq \frac{w_1'}{2}$, and then the bandwidth of the first optical signal is expanded from $w_1$ to $w_1'$. For another example, FIG. 15 is still another diagram of expanding the first optical signal. As shown in FIG. 15, the center frequency of the second optical signal may be first adjusted to $f_2'$, so that $|f_1 - f_2'| \geq \frac{w_1'}{2}$, and then the bandwidth of the first optical signal is expanded from $w_1$ to $w_1'$.

It should be understood that an expansion method of the second optical signal is similar to an expansion method of the first optical signal in FIG. 13 to FIG. 15, and details are not described herein again by using an example.

Optionally, the single-fiber bidirectional communication method described in the foregoing embodiment may be applied to a point-to-point communication system (for example, the point-to-point communication system shown in FIG. 3). For example, the first node may be the node A in FIG. 3, and the second node may be the node B in FIG. 3.

Optionally, the single-fiber bidirectional communication method described in the foregoing embodiment may be applied to a point-to-multipoint communication system (for example, the point-to-multipoint communication system shown in FIG. 4). The first node may communicate with n nodes through a first optical module, and the second node may be one of the n nodes. $n \geq 2$. For example, the first node may be the node A in FIG. 4, and the second node may be any one of the node B1 to the node Bn in FIG. 4.

Optionally, when the second node is a k$^{th}$ node in the n nodes, the first optical signal is an optical signal $A_k$ sent by the first node to the k$^{th}$ node in the n nodes, and the second optical signal is an optical signal $B_k$ sent by the k$^{th}$ node in the n nodes to the first node. If a center frequency of the optical signal $A_k$ is $f_{Ak}$, and a center frequency of the optical signal $B_k$ is $f_{Bk}$, $f_1 = f_{Ak}$, and $f_2 = f_{Bk}$. Therefore, $f_{Ak}$ is different from $f_{Bk}$, and $|f_{Ak} - f_{Bk}|$ is less than a first threshold. $f_{Ak}$ is the center frequency of the optical signal $A_k$, $f_{Bk}$ is the center frequency of the optical signal $B_k$, and k is a positive integer from 1 to n.

Optionally, a value relationship between the center frequencies of the optical signal $A_k$ and the optical signal $B_k$ is not limited. In a possible implementation, $f_{Ak} < f_{Bk}$ or $f_{Bk} < f_{Ak}$.

Optionally, a frequency range of the optical signal $A_k$ and a frequency range of the optical signal $B_k$ do not overlap or partially overlap. In a possible implementation,

$$|f_{Ak} - f_{Bk}| \geq \frac{w_{Ak}}{2} \quad \text{or}$$

$$|f_{Ak} - f_{Bk}| \leq \frac{w_{Bk}}{2} \cdot \frac{w_{Ak}}{2} \text{ is a maximum frequency}$$

band width of the optical signal $A_k$, and $\frac{w_{Bk}}{2}$ is a maximum frequency band width of the optical signal $B_k$.

Optionally, value relationships between center frequencies of optical signals transmitted between the first node and different nodes in the n nodes are not limited in this application. To be specific, none of a value relationship between $f_{Ak}$ and $f_{Ax}$, a value relationship between $f_{Ak}$ and $f_{Bx}$, a value relationship between $f_{Bk}$ and $f_{Ax}$, and a value relationship between $f_{Bk}$ and $f_{Bx}$ is limited. $f_{Ax}$ is a center frequency of an optical signal $A_x$ sent by the first node to an x$^{th}$ node in the n nodes, $f_{Bx}$ is a center frequency of an optical signal $B_x$ sent by the x$^{th}$ node in the n nodes to the first node, x is a positive integer from 1 to n, and x is not equal to k.

In a possible implementation, the center frequencies of the optical signals transmitted between the first node and different nodes in the n nodes may be different. To be specific, the center frequency of the optical signal $A_x$ is different from that of the optical signal $A_k$ or the optical signal $B_k$, the center frequency of the optical signal $B_x$ is also different from that of the optical signal $A_k$ or the optical signal $B_k$, and $f_{Ak} \neq f_{Bk} \neq f_{Ax} \neq f_{Bx}$. In this case, 2n optical signals with different center frequencies are transmitted between the first node and the n nodes, that is, 2n different wavelengths are used for the optical signals transmitted between the first node and the n nodes.

In another possible implementation, the center frequencies of the optical signals transmitted between the first node and different nodes in the n nodes may be the same. To be specific, the center frequency of the optical signal $A_x$ may be the same as that of the optical signal $A_k$ or the optical signal $B_k$, and/or the center frequency of the optical signal $B_x$ may be the same as that of the optical signal $A_k$ or the optical signal $B_k$. A case of $f_{Ak} = f_{Ax}$, $f_{Ak} = f_{Bx}$, $f_{Bk} = f_{Ax}$, or $f_{Bk} = f_{Bx}$ exists. In this case, a quantity of center frequencies used for optical signals transmitted between the first node and the n nodes is less than 2n, that is, a quantity of wavelengths used for optical signals transmitted between the first node and the n nodes is less than 2n.

Optionally, if the center frequencies of the optical signal $A_x$ and the optical signal $A_k$ are the same (that is, wavelengths are the same), the optical signal $A_x$ and the optical signal $A_k$ may be distinguished in time domain. If the center frequencies of the optical signal $B_x$ and the optical signal $B_k$ are the same (that is, wavelengths are the same), the optical signal $B_x$ and the optical signal $B_k$ may be distinguished in time domain.

Optionally, the optical signal $A_k$ and the optical signal $B_k$ may be adjacent in frequency domain. To be specific, the center frequencies of the optical signal $A_k$ and the optical signal $B_k$ are both less than the center frequencies of the optical signal $A_x$ and the optical signal $B_x$, or the center frequencies of the optical signal $A_k$ and the optical signal $B_k$ are both greater than the center frequencies of the optical signal $A_x$ and the optical signal $B_x$. In a possible implementation, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$.

Optionally, frequency ranges of the optical signals transmitted between the first node and different nodes in the n nodes do not overlap or partially overlap. In a possible implementation, in all optical signals transmitted between the first node and the n nodes, if the optical signal $A_k$ is closest to the optical signal $A_x$ in frequency domain, $|f_{Ak} - f_{Ax}| \geq \frac{w_{Ak}}{2}$, and

$|f_{Ak} - f_{Ax}| \geq \frac{w_{Ax}}{2}$. If the optical signal $A_k$ is closest to the optical signal $B_x$ in frequency domain, $|f_{Ak} - f_{Bx}| \geq \frac{w_{Ak}}{2}$, and $|f_{Ak} - f_{Bx}| \geq \frac{w_{Bx}}{2}$. $w_{Ak}$ is a maximum frequency band width of the optical signal $A_x$, and $w_{Bx}$ is a maximum frequency band width of the optical signal $B_x$.

Optionally, if the frequency range of the optical signal $A_k$ and the frequency range of the optical signal $B_k$ do not overlap and the frequency ranges of the optical signals transmitted between the first node and different nodes in the n nodes do not overlap, frequency ranges of all optical signals transmitted between the first node and the n nodes do not overlap. In a possible implementation, the frequency ranges of all optical signals transmitted between the first node and the n nodes may be continuous in frequency domain.

Optionally, maximum frequency band widths of the optical signals transmitted between the first node and different nodes in the n nodes may be the same or may be different. If the maximum frequency band widths of the optical signals transmitted between the first node and different nodes in the n nodes are different, it means that communication bandwidths between the first node and different nodes in the n nodes are different.

For example, it is assumed that the frequency ranges of all optical signals transmitted between the first node and the n nodes are continuous in frequency domain, and maximum frequency band widths of different optical signals are the same. In addition, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. In addition, $f_{Ak} < f_{Bk}$. In this case, a diagram of optical signals transmitted between the first node and the n nodes may be shown in FIG. 16. Maximum frequency band widths of an optical signal $A_1$ to an optical signal $A_n$ and an optical signal $B_1$ to an optical signal $B_n$ are the same, occupied frequency ranges are continuous in frequency domain, and $f_{A1} < f_{B1} < f_{A2} < f_{B2} < \cdots < f_{A(n-1)} < f_{B(n-1)} < f_{An} < f_{Bn}$.

For example, it is assumed that the frequency ranges of all optical signals transmitted between the first node and the n nodes are continuous in frequency domain, and maximum frequency band widths of different optical signals are the same. In addition, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. In addition, $f_{Bk} < f_{Ak}$. In this case, a diagram of optical signals transmitted between the first node and the n nodes may be shown in FIG. 17. FIG. 17 shows frequency attributes and bandwidth attributes of the optical signal $A_1$ to the optical signal $A_n$ and the optical signal $B_1$ to the optical signal $B_n$. The maximum frequency band widths of the optical signal $A_1$ to the optical signal $A_n$ and the optical signal $B_1$ to the optical signal $B_n$ are the same, occupied frequency ranges are continuous in frequency domain, and $f_{B1} < f_{A1} < f_{B2} < f_{A2} < \cdots < f_{B(n-1)} < f_{A(n-1)} < f_{Bn} < f_{An}$.

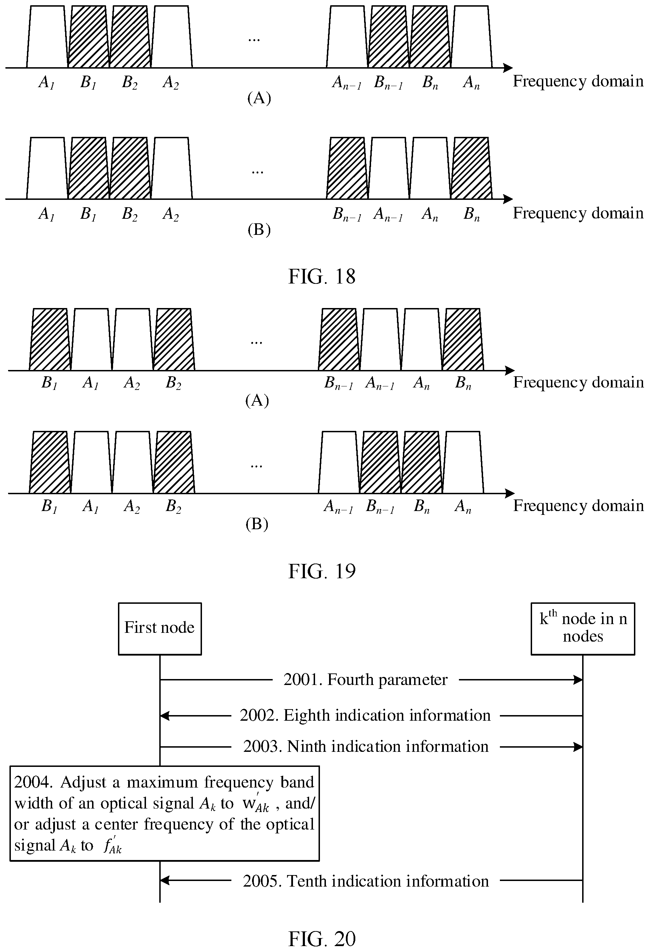

For example, it is assumed that the frequency ranges of all optical signals transmitted between the first node and the n nodes are continuous in frequency domain, and maximum frequency band widths of different optical signals are the same. In addition, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Ak} < f_{Bk}$, or if k is an even number, $f_{Bk} < f_{Ak}$. In this case, if n is an even number, a diagram of optical signals transmitted between the first node and the n nodes may be shown in (A) in FIG. 18. Maximum frequency band widths of an optical signal $A_1$ to an optical signal $A_n$ and an optical signal $B_1$ to an optical signal $B_n$ are the same, occupied frequency ranges are continuous in frequency domain, and $f_{A1} < f_{B1} < f_{B2} < f_{A2} < \cdots < f_{A(n-1)} < f_{B(n-1)} < f_{Bn} < f_{An}$. If n is an odd number, a diagram of optical signals transmitted between the first node and the n nodes may be shown in (B) in FIG. 18. Maximum frequency band widths of an optical signal $A_1$ to an optical signal $A_n$ and an optical signal $B_1$ to an optical signal $B_n$ are the same, occupied frequency ranges are continuous in frequency domain, and $f_{A1} < f_{B1} < f_{B2} < f_{A2} < \cdots < f_{B(n-1)} < f_{A(n-1)} < f_{An} < f_{Bn}$.

For example, it is assumed that the frequency ranges of all optical signals transmitted between the first node and the n nodes are continuous in frequency domain, and maximum frequency band widths of different optical signals are the same. In addition, when k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Bk} < f_{Ak}$, or if k is an even number, $f_{Ak} < f_{Bk}$. In this case, if n is an even number, a diagram of optical signals transmitted between the first node and the n nodes may be shown in (A) in FIG. 19. Maximum frequency band widths of an optical signal $A_1$ to an optical signal $A_n$ and an optical signal $B_1$ to an optical signal $B_n$ are the same, occupied frequency ranges are continuous in frequency domain, and $f_{B1} < f_{A1} < f_{A2} < f_{B2} < \cdots < f_{B(n-1)} < f_{A(n-1)} < f_{An} < f_{Bn}$. If n is an odd number, a diagram of optical signals transmitted between the first node and the n nodes may be shown in (B) in FIG. 19. Maximum frequency band widths of an optical signal $A_1$ to an optical signal $A_n$ and an optical signal $B_1$ to an optical signal $B_n$ are the same, occupied frequency ranges are continuous in frequency domain, and $f_{B1} < f_{A1} < f_{A2} < f_{B2} < \cdots < f_{A(n-1)} < f_{B(n-1)} < f_{Bn} < f_{An}$.

Optionally, when center frequencies and bandwidths of the optical signals transmitted between the first node and the n nodes meet a first condition or a second condition, a receiving frequency range of receiving the optical signal $B_k$ by the first node may be adjusted to $f_{Ak} - \frac{w_{Ak}}{2} - w_{Bk}$ to $f_{Ak} + \frac{w_{Ak}}{2} + w_{Bk}$, so that a probability that the first node simultaneously receives a plurality of optical signals can be reduced, and interference caused when the first node receives the optical signal $B_k$ can be reduced. The first condition is: When k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Ak} < f_{Bk}$, or if k is an even number, $f_{Bk} < f_{Ak}$. The second condition is: When k > 1, $f_{Ak} > f_{A(k-1)}$, $f_{Ak} > f_{B(k-1)}$, $f_{Bk} > f_{A(k-1)}$, and $f_{Bk} > f_{B(k-1)}$. If k is an odd number, $f_{Bk} < f_{Ak}$, or if k is an even number, $f_{Ak} < f_{Bk}$.

For example, the optical signals shown in FIG. 18 meet the first condition, and the optical signals shown in FIG. 19 meet the second condition. Referring to FIG. 18 or FIG. 19, if a receiving frequency range of receiving the optical signal $B_2$ by the first node is set to $f_1 - \frac{w_1}{2} - w_2$ to $f_1 + \frac{w_1}{2} + w_1$, within the frequency range, the first node receives only the optical signal $B_2$ and does not receive the optical signal $B_1$ or the optical signal $B_3$.

Optionally, in a point-to-multipoint communication scenario, the first node may also adjust the optical signal $A_k$ and/or the optical signal $B_k$ through signaling exchange with any node in the n nodes. The adjustment performed on the optical signal $A_k$ and/or the optical signal $B_k$ includes center frequency adjustment and/or bandwidth adjustment.

The adjustment of the optical signal $A_k$ is used as an example. FIG. 20 is a flowchart of still another single-fiber bidirectional communication method according to this application. As shown in FIG. 20, the single-fiber bidirectional communication method provided in this application may include step 2001 to step 2005.

Step 2001: A first node sends, to a $k^{th}$ node in n nodes, a fourth parameter for adjusting an optical signal $A_k$, and correspondingly, the $k^{th}$ node in the n nodes receives the fourth parameter from the first node.

Optionally, if a center frequency of the optical signal $A_k$ needs to be adjusted, the fourth parameter may be a parameter related to adjustment of the center frequency of the optical signal $A_k$. In an implementation, the fourth parameter may be an adjusted center frequency $f'_{Ak}$ of the optical signal $A_k$.

Optionally, when the center frequency of the optical signal $A_k$ is adjusted and a bandwidth of the optical signal $A_k$ is not adjusted, $|f'_{Ak} - f_{Bk}| \geq \frac{w_{Ak}}{2}$, and $|f'_{Ak} - f_{Bk}| \geq \frac{w_{Bk}}{2}$.

Optionally, if the bandwidth of the optical signal $A_k$ needs to be adjusted, the fourth parameter may be a parameter related to adjustment of the bandwidth of the optical signal $A_k$. In an implementation, the fourth parameter may be an adjusted maximum frequency band width $w'_{Ak}$ occupied by the optical signal $A_k$, or the fourth parameter is a difference $\Delta w_{Ak}$ between the adjusted maximum frequency band width occupied by the optical signal $A_k$ and a maximum frequency band width occupied by the optical signal $A_k$ before the adjustment, where $\Delta w_{Ak} = w'_{Ak} - w_{Ak}$.

Optionally, when the center frequency of the optical signal $A_k$ is not adjusted and the bandwidth of the optical signal $A_k$ is adjusted, $|f_{Ak} - f_{Bk}| \geq \frac{w'_{Ak}}{2}$, and $|f_{Ak} - f_{Bk}| \geq \frac{w_{Bk}}{2}$.

Optionally, if both the bandwidth and the center frequency of the optical signal $A_k$ need to be adjusted, the fourth parameter may be a parameter related to adjustment of the bandwidth and the center frequency of the optical signal $A_k$. In an implementation, the fourth parameter may include $w'_{Ak}$ and $f'_{Ak}$, or $\Delta w_{Ak}$ and $f'_{Ak}$.

Optionally, when both the center frequency and the bandwidth of the optical signal $A_k$ are adjusted, $|f'_{Ak} - f_{Bk}| \geq \frac{w'_{Ak}}{2}$, and $|f'_{Ak} - f_{Bk}| \geq \frac{w_{Bk}}{2}$.

Step 2002: The $k^{th}$ node in the n nodes sends eighth indication information to the first node, and correspondingly, the first node receives the eighth indication information from the $k^{th}$ node in the n nodes. The eighth indication information indicates that the $k^{th}$ node in the n nodes agrees to adjust the optical signal $A_k$ based on the

fourth parameter.

Optionally, if an adjusted frequency range of the optical signal $A_k$ indicated by the fourth parameter does not exceed a maximum frequency range of receiving supported by the $k^{th}$ node in the n nodes, the $k^{th}$ node in the n nodes may send the eighth indication information to the first node.

After receiving the eighth indication information from the $k^{th}$ node in the n nodes, the first node determines that the optical signal $A_k$ can be adjusted, and then performs subsequent steps 2003 to 2005.

Step 2003: The first node sends ninth indication information to the $k^{th}$ node in the n nodes, and correspondingly, the $k^{th}$ node in the n nodes receives the ninth indication information from the first node. The ninth indication information indicates that the first node starts to adjust the optical signal $A_k$.

After receiving the ninth indication information, the $k^{th}$ node in the n nodes may learn that the first node starts to adjust the optical signal $A_k$. In this case, the $k^{th}$ node in the n nodes is in a waiting state until learning that the first node has completed adjustment. In the waiting state, the $k^{th}$ node in the n nodes does not send a signal to the first node.

Step 2004: The first node adjusts the maximum frequency band width of the optical signal $A_k$ to $w'_{Ak}$, and/or adjusts the center frequency of the optical signal $A_k$ to $f'_{Ak}$.

Optionally, if the fourth parameter is $f'_{Ak}$, the first node may adjust the center frequency of the optical signal $A_k$ to $f'_{Ak}$.

Optionally, if the fourth parameter is $w'_{Ak}$ or $\Delta w_{Ak}$, the first node may adjust the maximum frequency band width of the optical signal $A_k$ to $w'_{Ak}$.

Optionally, if the fourth parameter includes $w'_{Ak}$ and $f'_{Ak}$, or $\Delta w_{Ak}$ and $f'_{Ak}$, the first node may adjust the maximum frequency band width of the optical signal $A_k$ to $w'_1$, and adjust the center frequency of the first optical signal to $f'_1$.

Step 2005: The first node sends tenth indication information to the $k^{th}$ node in the n nodes, and correspondingly, the $k^{th}$ node in the n nodes receives the tenth indication information from the first node. The tenth indication information indicates that the first node has completed adjustment of the optical signal $A_k$.

After receiving the tenth indication information, the $k^{th}$ node in the n nodes ends the waiting state.

Optionally, after the $k^{th}$ node in the n nodes receives the tenth indication information, the $k^{th}$ node in the n nodes may further adaptively adjust a receiving frequency range of a coherent receiver in the node based on the fourth parameter, and determine that an adjusted

optical signal $A_k$ can be received.

In a possible implementation, when the center frequency of the optical signal $A_k$ remains unchanged and the maximum frequency band width is adjusted to $\mathrm{w}'_{Ak}$, if an output frequency of a laser of the $k^{th}$ node in the n nodes is $f_{LBk}$, a frequency range of receiving the adjusted optical signal $A_k$ by the coherent receiver of the $k^{th}$ node in the n nodes is $(f_{LBk} - \Delta g)$ to $f_{LBk}$ and $f_{LBk}$ to $(f_{LBk} + \Delta g)$, where $\Delta g \geq |f_{LBk} - f_{Ak}| + \dfrac{w'_{Ak}}{2}$.

In a possible implementation, when the adjusted center frequency of the optical signal $A_k$ is adjusted to $f'_{Ak}$ and the maximum frequency band width remains unchanged, if the output frequency of the laser of the $k^{th}$ node in the n nodes is $f_{LBk}$, a frequency range of receiving the adjusted optical signal $A_k$ by the coherent receiver of the $k^{th}$ node in the n nodes is $(f_{LBk} - \Delta h)$ to $f_{LBk}$ and $f_{LBk}$ to $(f_{LBk} + \Delta h)$, where $\Delta h \geq |f_{LBk} - f'_{Ak}| + \dfrac{w_{Ak}}{2}$.

In a possible implementation, when the adjusted center frequency of the optical signal $A_k$ is adjusted to $f'_{Ak}$ and the maximum frequency band width is adjusted to $\mathrm{w}'_{Ak}$, if the output frequency of the laser of the $k^{th}$ node in the n nodes is $f_{LBk}$, a frequency range of receiving the adjusted optical signal $A_k$ by the coherent receiver of the $k^{th}$ node in the n nodes is $(f_{LBk} - \Delta i)$ to $f_{LBk}$ and $f_{LBk}$ to $(f_{LBk} + \Delta i)$, where $\Delta i \geq |f_{LBk} - f'_{Ak}| + \dfrac{w'_{Ak}}{2}$.

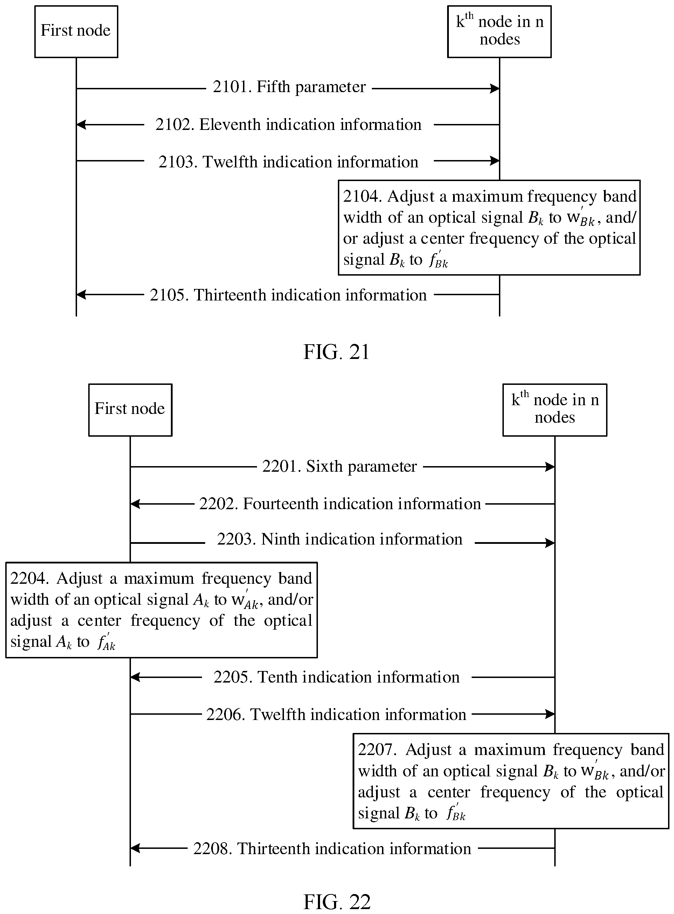

The adjustment of the optical signal $B_k$ is used as an example. FIG. 21 is a flowchart of still another single-fiber bidirectional communication method according to this application. As shown in FIG. 21, the single-fiber bidirectional communication method provided in this application may include step 2101 to step 2105.

Step 2101: A first node sends, to a $k^{th}$ node in n nodes, a fifth parameter for adjusting an optical signal $B_k$, and correspondingly, the $k^{th}$ node in the n nodes receives the fifth parameter from the first node.

Optionally, if a center frequency of the optical signal $B_k$ needs to be adjusted, the fifth parameter may be a parameter related to adjustment of the center frequency of the optical signal $B_k$. In an implementation, the fifth parameter may be an adjusted center frequency $f'_{Bk}$ of the optical signal $B_k$.

Optionally, when the center frequency of the optical signal $B_k$ is adjusted and a bandwidth of the optical signal $B_k$ is not adjusted, $|f_{Ak} - f'_{Bk}| \geq \dfrac{w_{Ak}}{2}$, and $|f_{Ak} - f'_{Bk}| \geq \dfrac{w_{Bk}}{2}$.

Optionally, if the bandwidth of the optical signal $B_k$ needs to be adjusted, the fifth parameter may be a parameter related to adjustment of the bandwidth of the optical signal $B_k$. In an implementation, the fifth parameter may be an adjusted maximum frequency band width $\mathrm{w}'_{Bk}$ occupied by the optical signal $B_k$, or the fifth parameter is a difference $\Delta w_{Bk}$ between the adjusted maximum frequency band width occupied by the optical signal $B_k$ and a maximum frequency band width occupied by the optical signal $B_k$ before the adjustment, where $\Delta w_{Bk} = w'_{Bk} - w_{Bk}$.

Optionally, when the center frequency of the optical signal $B_k$ is not adjusted and the bandwidth of the optical signal $B_k$ is adjusted, $|f_{Ak} - f_{Bk}| \geq \dfrac{w_{Ak}}{2}$, and $|f_{Ak} - f_{Bk}| \geq \dfrac{w'_{Bk}}{2}$.

Optionally, if both the bandwidth and the center frequency of the optical signal $B_k$ need to be adjusted, the fifth parameter may be a parameter related to adjustment of the bandwidth and the center frequency of the optical signal $B_k$. In an implementation, the fifth parameter may include $\mathrm{w}'_{Bk}$ and $f'_{Bk}$, or $\Delta w_{Bk}$ and $f'_{Bk}$.

Optionally, when both the center frequency and the bandwidth of the optical signal $B_k$ are adjusted, $|f_{Ak} - f'_{Bk}| \geq \dfrac{w_{Ak}}{2}$, and $|f_{Ak} - f'_{Bk}| \geq \dfrac{w'_{Bk}}{2}$.

Step 2102: The $k^{th}$ node in the n nodes sends eleventh indication information to the first node, and correspondingly, the first node receives the eleventh indication information from the $k^{th}$ node in the n nodes. The eleventh indication information indicates that the $k^{th}$ node in the n nodes agrees to adjust the optical signal $B_k$ based on the fifth parameter.

Optionally, if an adjusted frequency range of the optical signal $B_k$ indicated by the fifth parameter does not exceed a maximum frequency range of modulation supported by a laser modulator of the $k^{th}$ node in the n nodes, the $k^{th}$ node in the n nodes sends the eleventh indication information to the first node.

After receiving the eleventh indication information from the $k^{th}$ node in the n nodes, the first node determines that the optical signal $B_k$ can be adjusted, and then performs subsequent steps 2103 to 2105.

Step 2103: The first node sends twelfth indication information to the $k^{th}$ node in the n nodes, and correspondingly, the $k^{th}$ node in the n nodes receives the twelfth indication information from the first node. The twelfth indication information indicates the $k^{th}$ node in the n nodes to start to adjust the optical signal $B_k$.

The $k^{th}$ node in the n nodes may start to adjust the second optical signal based on an indication of the twelfth indication information.

After sending the twelfth indication information, the first node is in a waiting state until learning that the $k^{th}$

node in the n nodes has completed adjustment. In the waiting state, the first node does not send a signal to the k<sup>th</sup> node in the n nodes.

Step 2104: The k<sup>th</sup> node in the n nodes adjusts the maximum frequency band width of the optical signal $B_k$ to $w'_{Bk}$, and/or adjusts the center frequency of the optical signal $B_k$ to $f'_{Bk}$.

Optionally, if the fifth parameter is $f'_{Bk}$, the first node may adjust the center frequency of the optical signal $B_k$ to $f'_{Bk}$.

Optionally, if the fifth parameter is $w'_{Bk}$ or $\Delta w_{Bk}$, the first node may adjust the maximum frequency band width of the optical signal $B_k$ to $w'_{Bk}$.

Optionally, if the fifth parameter includes $w'_{Bk}$ and $f'_{Bk}$, or $\Delta w_{Bk}$ and $f'_{Bk}$, the first node may adjust the maximum frequency band width of the optical signal $B_k$ to $w'_{Bk}$, and adjust the center frequency of the first optical signal to $f'_{Bk}$.

Step 2105: The k<sup>th</sup> node in the n nodes sends thirteenth indication information to the first node, and correspondingly, the first node receives the thirteenth indication information from the k<sup>th</sup> node in the n nodes. The thirteenth indication information indicates that the k<sup>th</sup> node in the n nodes has completed adjustment of the optical signal $B_k$.

After receiving the thirteenth indication information, the first node ends the waiting state.

Optionally, after the first node receives the thirteenth indication information, the first node may further adaptively adjust a receiving frequency range of a first coherent receiver based on the fifth parameter, and determine that an adjusted optical signal $B_k$ can be received.

In a possible implementation, when the adjusted center frequency of the optical signal $B_k$ remains unchanged and the maximum frequency band width is adjusted to $w'_{Bk}$, if an output frequency of a first laser is $f_{LAk}$, a frequency range of receiving the adjusted optical signal $B_k$ by the first coherent receiver is $(f_{LAk} - \Delta j)$ to $f_{LAk}$ and $f_{LAk}$ to $(f_{LAk} + \Delta j)$, where $\Delta j \geq |f_{LAk} - f_{Bk}| + \frac{w'_{Bk}}{2}$.

In a possible implementation, when the adjusted center frequency of the first optical signal is adjusted to $f'_2$ and the maximum frequency band width remains unchanged, if the output frequency of the first laser is $f_{LAk}$, a frequency range of receiving the adjusted optical signal $B_k$ by the first coherent receiver is $(f_{LAk} - \Delta k)$ to $f_{LAk}$ and $f_{LAk}$ to $(f_{LAk} + \Delta k)$, where $\Delta k \geq$ $|f_{LAk} - f'_{Bk}| + \frac{w_{Bk}}{2}$.

In a possible implementation, when the adjusted center frequency of the first optical signal is adjusted to $f'_2$ and the maximum frequency band width is adjusted to $w'_2$, if the output frequency of the first laser is $f_{LAk}$, a frequency range of receiving the adjusted optical signal $B_k$ by the first coherent receiver is $(f_{LAk} - \Delta l)$ to $f_{LAk}$ and $f_{LAk}$ to $(f_{LAk} + \Delta l)$, where $\Delta l \geq |f_{LAk} - f'_{Bk}| + \frac{w'_{Bk}}{2}$.

The adjustment of the optical signal $A_k$ and the optical signal $B_k$ is used as an example. FIG. 22 is a flowchart of still another single-fiber bidirectional communication method according to this application. As shown in FIG. 22, the single-fiber bidirectional communication method provided in this application may include step 2201 to step 2208.

Step 2201: A first node sends, to a k<sup>th</sup> node in n nodes, a sixth parameter for adjusting an optical signal $A_k$ and an optical signal $B_k$, and correspondingly, the k<sup>th</sup> node in the n nodes receives the sixth parameter from the first node.

Optionally, if a center frequency of the optical signal $A_k$ and a center frequency of the optical signal $B_k$ need to be adjusted, the sixth parameter may be a parameter related to adjustment of the center frequency of the optical signal $A_k$ and adjustment of the center frequency of the optical signal $B_k$. In an implementation, the sixth parameter may include $f'_{Ak}$ and $f'_{Bk}$.

Optionally, when the center frequency of the optical signal $A_k$ and the center frequency of the optical signal $B_k$ are adjusted, $|f'_{Ak} - f'_{Bk}| \geq \frac{w_{Ak}}{2}$, and $|f'_{Ak} - f'_{Bk}| \geq \frac{w_{Bk}}{2}$.

Optionally, if a bandwidth of the optical signal $A_k$ and a bandwidth of the optical signal $B_k$ need to be adjusted, the sixth parameter may be a parameter related to adjustment of the bandwidth of the optical signal $A_k$ and adjustment of the bandwidth of the optical signal $B_k$. In an implementation, the sixth parameter may include $w'_{Ak}$ and $w'_{Bk}$, or $\Delta w_{Ak}$ and $\Delta w_{Bk}$, or $w'_{Ak}$ and $\Delta w_{Bk}$, or $\Delta w_{Ak}$ and $w'_{Bk}$.

Optionally, when the bandwidth of the optical signal $A_k$ and the bandwidth of the optical signal $B_k$ are adjusted, $|f_{Ak} - f_{Bk}| \geq \frac{w'_{Ak}}{2}$, and $|f_{Ak} - f_{Bk}| \geq \frac{w'_{Bk}}{2}$.

Optionally, if the bandwidth of the optical signal

$A_k$ and the center frequency of the optical signal $B_k$ need to be adjusted, the sixth parameter may be a parameter related to adjustment of the bandwidth of the optical signal $A_k$ and adjustment of the center frequency of the optical signal $B_k$. In an implementation, the sixth parameter may include $w'_{Ak}$ and $f'_{Bk}$, or $\Delta w_{Ak}$ and $f'_{Bk}$.

Optionally, when the bandwidth of the optical signal $A_k$ and the center frequency of the optical signal $B_k$ are adjusted, $|f_{Ak} - f'_{Bk}| \geq \frac{w'_{Ak}}{2}$, and $|f_{Ak} - f'_{Bk}| \geq \frac{w_{Bk}}{2}$.

Optionally, if the bandwidth of the optical signal $A_k$, the center frequency of the optical signal $A_k$, and the center frequency of the optical signal $B_k$ need to be adjusted, the sixth parameter may be a parameter related to adjustment of the bandwidth of the optical signal $A_k$, adjustment of the center frequency of the optical signal $A_k$, and adjustment of the center frequency of the optical signal $B_k$. In an implementation, the sixth parameter may include $w'_{Ak}, f'_{Ak}$, and $f'_{Bk}$, or $\Delta w_{Ak}, f'_{Ak}$, and $f'_{Bk}$.

Optionally, when the bandwidth of the optical signal $A_k$, the center frequency of the optical signal $A_k$, and the center frequency of the optical signal $B_k$ are adjusted, $|f'_{Ak} - f'_{Bk}| \geq \frac{w'_{Ak}}{2}$, and $|f'_{Ak} - f'_{Bk}| \geq \frac{w_{Bk}}{2}$.

Optionally, if the bandwidth of the optical signal $B_k$ and the center frequency of the optical signal $A_k$ need to be adjusted, the sixth parameter may be a parameter related to adjustment of the bandwidth of the optical signal $B_k$ and adjustment of the center frequency of the optical signal $A_k$. In an implementation, the sixth parameter may include $w'_{Bk}$ and $f'_{Ak}$, or $\Delta w_{Bk}$ and $f'_{Ak}$.

Optionally, when the bandwidth of the optical signal $B_k$ and the center frequency of the optical signal $A_k$ are adjusted, $|f'_{Ak} - f_{Bk}| \geq \frac{w_{Ak}}{2}$, and $|f'_{Ak} - f_{Bk}| \geq \frac{w'_{Bk}}{2}$.

Optionally, if the bandwidth of the optical signal $B_k$, the center frequency of the optical signal $B_k$, and the center frequency of the optical signal $A_k$ need to be adjusted, the sixth parameter may be a parameter related to adjustment of the bandwidth of the optical signal $B_k$, adjustment of the center frequency of the optical signal $B_k$, and adjustment of the center frequency of the optical signal $A_k$. In an implementation, the sixth parameter may include $w'_{Bk}, f'_{Bk}$, and $f'_{Ak}$, or $\Delta w_{Bk}, f'_{Bk}$, and

$f'_{Ak}$.

Optionally, when the bandwidth of the optical signal $B_k$, the center frequency of the optical signal $B_k$, and the center frequency of the optical signal $A_k$ are adjusted, $|f'_{Ak} - f'_{Bk}| \geq \frac{w_{Ak}}{2}$, and $|f'_{Ak} - f'_{Bk}| \geq \frac{w'_{Bk}}{2}$.

Step 2202: The $k^{th}$ node in the n nodes sends fourteenth indication information to the first node, and correspondingly, the first node receives the fourteenth indication information from the $k^{th}$ node in the n nodes. The fourteenth indication information indicates that the $k^{th}$ node in the n nodes agrees to adjust the optical signal $A_k$ and the optical signal $B_k$ based on the sixth parameter.

Optionally, if an adjusted frequency range of the optical signal $A_k$ indicated by the sixth parameter does not exceed a maximum frequency range of receiving supported by a coherent receiver of the $k^{th}$ node in the n nodes, and an adjusted frequency range of the optical signal $B_k$ does not exceed a maximum frequency range of modulation supported by a laser modulator of the $k^{th}$ node in the n nodes, the $k^{th}$ node in the n nodes may send the fourteenth indication information to the first node.

After receiving the fourteenth indication information from the $k^{th}$ node in the n nodes, the first node determines that the optical signal $A_k$ and the optical signal $B_k$ can be adjusted, and then performs subsequent steps 2203 to 2208.

Step 2203: The first node sends ninth indication information to the $k^{th}$ node in the n nodes, and correspondingly, the $k^{th}$ node in the n nodes receives the ninth indication information from the first node. The ninth indication information indicates that the first node starts to adjust the optical signal $A_k$.

For step 2203, refer to related descriptions in step 2003. Details are not described herein again.

Step 2204: The first node adjusts the maximum frequency band width of the optical signal $A_k$ to $w'_{Ak}$, and/or adjusts the center frequency of the optical signal $A_k$ to $f'_{Ak}$.

Optionally, if the sixth parameter includes $f'_{Ak}$, the first node may adjust the center frequency of the optical signal $A_k$ to $f'_{Ak}$.

Optionally, if the sixth parameter includes $w'_{Ak}$ or $\Delta w_{Ak}$, the first node may adjust the maximum frequency band width of the optical signal $A_k$ to $w'_{Ak}$.

Optionally, if the sixth parameter includes $w'_{Ak}$ and $f'_{Ak}$, or $\Delta w_{Ak}$ and $f'_{Ak}$, the first node may adjust the maximum frequency band width of the

optical signal $A_k$ to $\mathrm{w}'_{Ak}$ , and adjust the center frequency of the first optical signal to $f'_{Ak}$ .

Step 2205: The first node sends tenth indication information to the $k^{th}$ node in the n nodes, and correspondingly, the $k^{th}$ node in the n nodes receives the tenth indication information from the first node. The tenth indication information indicates that the first node has completed adjustment of the optical signal $A_k$.

For step 2205, refer to related descriptions in step 2005. Details are not described herein again.

Step 2206: The first node sends twelfth indication information to the $k^{th}$ node in the n nodes, and correspondingly, the $k^{th}$ node in the n nodes receives the twelfth indication information from the first node. The twelfth indication information indicates the $k^{th}$ node in the n nodes to start to adjust the optical signal $B_k$.

For step 2206, refer to related descriptions in step 2003. Details are not described herein again.

Step 2207: The $k^{th}$ node in the n nodes adjusts the maximum frequency band width of the optical signal $B_k$ to $\mathrm{w}'_{Bk}$ , and/or adjusts the center frequency of the optical signal $B_k$ to $f'_{Bk}$ .

Optionally, if the sixth parameter includes $f'_{Bk}$ , the $k^{th}$ node in the n nodes may adjust the center frequency of the optical signal $B_k$ to $f'_{Bk}$ .

Optionally, if the sixth parameter includes $\mathrm{w}'_{Bk}$ or $\Delta w_{Bk}$, the $k^{th}$ node in the n nodes may adjust the maximum frequency band width of the optical signal $B_k$ to $\mathrm{w}'_{Bk}$ .

Optionally, if the sixth parameter includes $\mathrm{w}'_{Bk}$ and $f'_{Bk}$ , or $\Delta w_{Bk}$ and $f'_{Bk}$ , the $k^{th}$ node in the n nodes may adjust the maximum frequency band width of the optical signal $B_k$ to $\mathrm{w}'_{Bk}$ , and adjust the center frequency of the first optical signal to $f'_{Bk}$ .

Step 2208: The $k^{th}$ node in the n nodes sends thirteenth indication information to the first node, and correspondingly, the first node receives the thirteenth indication information from the $k^{th}$ node in the n nodes. The thirteenth indication information indicates that the $k^{th}$ node in the n nodes has completed adjustment of the optical signal $B_k$.

For step 2208, refer to related descriptions in step 2005. Details are not described herein again.

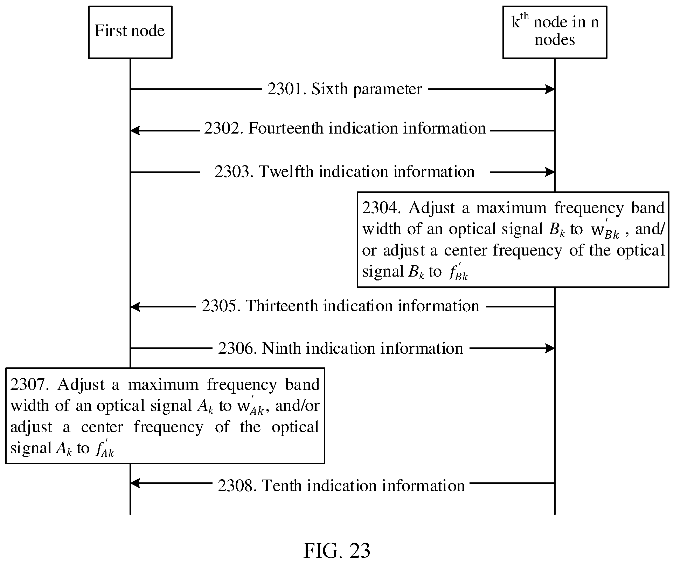

The adjustment of the optical signal $A_k$ and the optical signal $B_k$ is used as an example. FIG. 23 is a flowchart of still another single-fiber bidirectional communication method according to this application. As shown in FIG. 23, the single-fiber bidirectional communication method provided in this application may include step 2301 to step 2308.

Step 2301: A first node sends, to a $k^{th}$ node in n nodes, a sixth parameter for adjusting an optical signal $A_k$ and an optical signal $B_k$, and correspondingly, the $k^{th}$ node in the n nodes receives the sixth parameter from the first node.

For step 1231, refer to related descriptions in step 1101. Details are not described herein again.

Step 2302: The $k^{th}$ node in the n nodes sends fourteenth indication information to the first node, and correspondingly, the first node receives the fourteenth indication information from the $k^{th}$ node in the n nodes. The fourteenth indication information indicates that the $k^{th}$ node in the n nodes agrees to adjust the optical signal $A_k$ and the optical signal $B_k$ based on the sixth parameter.

For step 2302, refer to related descriptions in step 2202. Details are not described herein again.

Step 2303: The first node sends twelfth indication information to the $k^{th}$ node in the n nodes, and correspondingly, the $k^{th}$ node in the n nodes receives the twelfth indication information from the first node. The twelfth indication information indicates the $k^{th}$ node in the n nodes to start to adjust the optical signal $B_k$.

For step 1233, refer to related descriptions in step 2206. Details are not described herein again.

Step 2304: The $k^{th}$ node in the n nodes adjusts a maximum frequency band width of the optical signal $B_k$ to $\mathrm{w}'_{Bk}$ , and/or adjusts a center frequency of the optical signal $B_k$ to $f'_{Bk}$ .

For step 2304, refer to related descriptions in step 2207. Details are not described herein again.

Step 2305: The $k^{th}$ node in the n nodes sends thirteenth indication information to the first node, and correspondingly, the first node receives the thirteenth indication information from the $k^{th}$ node in the n nodes. The thirteenth indication information indicates that the $k^{th}$ node in the n nodes has completed adjustment of the optical signal $B_k$.

For step 2305, refer to related descriptions in step 2208. Details are not described herein again.

Step 2306: The first node sends ninth indication information to the $k^{th}$ node in the n nodes, and correspondingly, the $k^{th}$ node in the n nodes receives the ninth indication information from the first node. The ninth indication information indicates that the first node starts to adjust the optical signal $A_k$.

For step 2306, refer to related descriptions in step 2203. Details are not described herein again.

Step 2307: The first node adjusts a maximum frequency band width of the optical signal $A_k$ to $\mathrm{w}'_{Ak}$ , and/or adjusts a center frequency of the optical signal $A_k$ to $f'_{Ak}$ .

For step 2307, refer to related descriptions in step 2204. Details are not described herein again.

Step 2308: The first node sends tenth indication information to the $k^{th}$ node in the n nodes, and correspondingly, the $k^{th}$ node in the n nodes receives the tenth indication information from the first node. The tenth indication information indicates that the first node has completed adjustment of the optical signal $A_k$.

For step 2308, refer to related descriptions in step 2205. Details are not described herein again.

According to the single-fiber bidirectional communication methods corresponding to FIG. 20 to FIG. 23, adjustment of the optical signal $A_k$ and/or the optical signal $B_k$ transmitted between the first node and the $k^{th}$ node in the n nodes may be implemented.

Optionally, because the first node may communicate with the n nodes, another frequency range adjacent to the frequency ranges of the optical signal $A_k$ and the optical signal $B_k$ may be used by an optical signal of another node in the n nodes. Therefore, if the optical signal $A_k$ and/or the optical signal $B_k$ need/needs to be adjusted, an optical signal of another node in the n nodes further needs to be considered.

Optionally, if the adjusted optical signal $A_k$ and/or optical signal $B_k$ do/does not affect an optical signal of another node in the n nodes, the first node may directly perform the method corresponding to any embodiment in FIG. 20 to FIG. 22 without interacting with the another node in the n nodes.

Optionally, if the adjusted optical signal $A_k$ and/or optical signal $B_k$ may affect an optical signal of another node in the n nodes (for example, the adjusted frequency ranges of the optical signal $A_k$ and/or optical signal $B_k$ overlap a frequency range of the optical signal of the another node in the n nodes excessively, causing interference), a center frequency of the optical signal of the another node in the n nodes further needs to be adjusted.

In a possible implementation, it is assumed that the adjusted optical signal $A_k$ and/or optical signal $B_k$ affect/affects an optical signal $A_x$ and/or an optical signal $B_x$ of a node x in the n nodes. In this case, before starting to adjust the optical signal $A_k$ and/or the optical signal $B_k$, the first node may further adjust center frequencies of the optical signal $A_x$ and/or the optical signal $B_x$. x is a positive integer from 1 to n, and x is not equal to k. A process of adjusting the center frequencies of the optical signal $A_x$ and/or the optical signal $B_x$ is the same as a process of adjusting the optical signal $A_k$ and/or the optical signal $B_k$ in any foregoing embodiment in FIG. 20 to FIG. 23, and refer to the steps in any foregoing embodiment in FIG. 20 to FIG. 23. The center frequencies of the optical signal $A_x$ and/or the optical signal $B_x$ are adjusted by the first node.

Optionally, before step 2003, step 2103, step 2203, or step 2303, the method embodiment corresponding to FIG. 20, FIG. 21, FIG. 22, or FIG. 23 may further include step 2401 and step 2402.

Step 2401: The first node sends, to a node x in the n nodes, a seventh parameter for adjusting an optical signal $A_x$ and/or an optical signal $B_x$. The seventh parameter includes an adjusted center frequency $f'_{Ax}$ of the optical signal $A_x$ and/or an adjusted center frequency $f'_{Bx}$ of the optical signal $B_x$.

Step 2402: The first node receives fifteenth indication information from the node x in the n nodes. The fifteenth indication information indicates that the node x in the n nodes agrees to adjust the optical signal $A_x$ and/or the optical signal $B_x$ based on the seventh parameter.

After step 2401 and step 2402, the first node may further perform signaling exchange with the node x in the n nodes, to implement adjustment of the optical signal $A_x$ and/or the optical signal $B_x$. This process is the same as an adjustment process of the optical signal $A_k$ and/or the optical signal $B_k$, and details are not described herein again.

Optionally, in the embodiments corresponding to FIG. 20 to FIG. 23, $w_{Ak} < w'_{Ak}$, or $w_{Ak} > w'_{Ak}$. $w_{Bk} < w'_{Bk}$, or $w_{Bk} > w'_{Bk}$. In other words, the modulating the bandwidth of the optical signal $A_k$ may be increasing the bandwidth of the optical signal $A_k$, or may be decreasing the bandwidth of the optical signal $A_k$. The modulating the bandwidth of the optical signal $B_k$ may be increasing the bandwidth of the optical signal $B_k$, or may be decreasing the bandwidth of the optical signal $B_k$.

The increasing the bandwidth of the optical signal may be understood as expanding a communication bandwidth. The methods in the embodiments corresponding to FIG. 20 to FIG. 23 may be used to expand a bandwidth in point-to-multipoint single-fiber bidirectional communication.

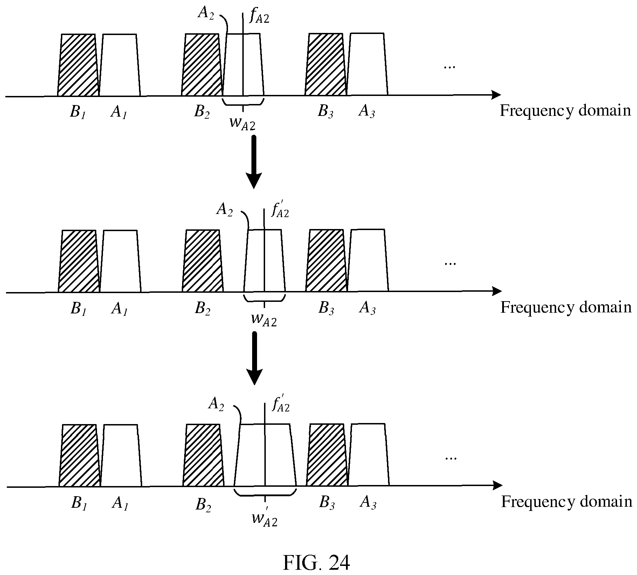

In a possible implementation, if an idle frequency range between optical signals adjacent to the optical signal $A_k$ in frequency domain is greater than or equal to a bandwidth to which the optical signal $A_k$ is to be expanded, when the bandwidth of the optical signal $A_k$ is expanded, center frequencies of the optical signals adjacent to the optical signal $A_k$ do not need to be adjusted. For example, FIG. 24 is a diagram of expanding an optical signal $A_k$. As shown in FIG. 24, a spatial frequency range between an optical signal $B_2$ and an optical signal $A_3$ that are adjacent to a to-be-adjusted optical signal $A_2$ is greater than a bandwidth $w'_{A2}$ to which the optical signal $A_2$ is to be expanded. Based on this, first, a center frequency of the optical signal $A_2$ may be adjusted from $f_{A2}$ to $f'_{A2}$, so that an idle frequency range on two sides of $f'_{A2}$ $f_{A2}$ is greater than $\dfrac{w'_{A2}}{2}$, and then the bandwidth of the optical signal $A_2$ may be expanded from $w_{A2}$ to $w'_{A2}$.

In a possible implementation, if an idle frequency range between optical signals adjacent to the optical signal $A_k$ in frequency domain is less than the bandwidth to which the optical signal $A_k$ is to be ex-

panded, the center frequencies of the optical signals adjacent to the optical signal $A_k$ further need to be adjusted, so that the idle frequency range between the adjacent optical signals is not less than the bandwidth to which the optical signal $A_k$ is to be expanded. In addition, when the center frequencies of the adjacent optical signals are adjusted, if another optical signal is affected, a center frequency of the affected optical signal is adjusted uniformly. Optionally, when the center frequencies of the optical signal adjacent to the optical signal $A_k$ need to be adjusted, only an optical signal on one side of the optical signal $A_k$ may be adjusted, or optical signals on both sides of the optical signal $A_k$ may be adjusted at the same time. This is not limited in this application.

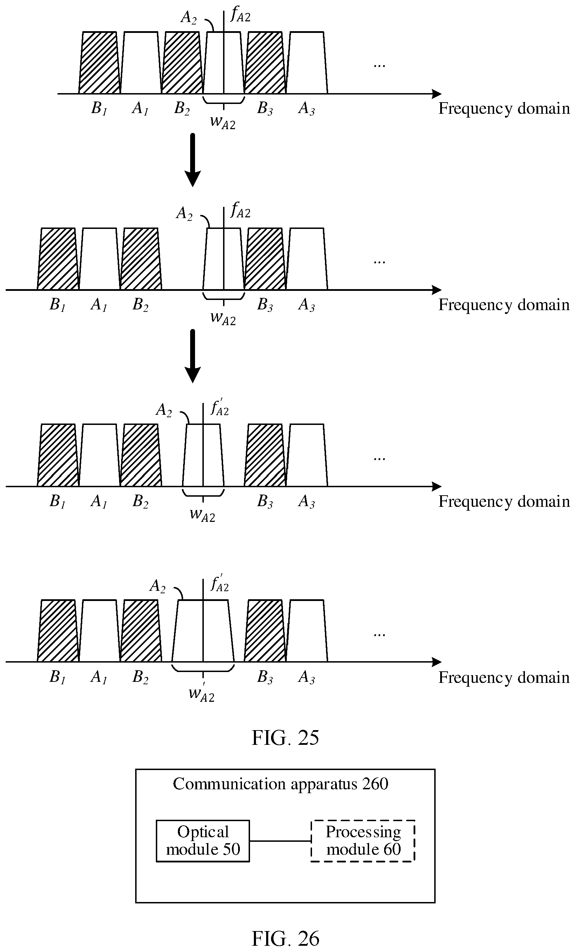

For example, FIG. 25 is another diagram of expanding an optical signal $A_k$. As shown in FIG. 25, frequency ranges of a plurality of optical signals are continuous in frequency domain, and the idle frequency range between the optical signal $B_2$ and the optical signal $A_3$ that are adjacent to the to-be-adjusted optical signal $A_2$ is less than the bandwidth $w'_{A2}$ to which the optical signal $A_2$ is to be expanded. Based on this, first, center frequencies of the optical signal $B_1$, the optical signal $A_1$, and the optical signal $B_2$ may be adjusted, so that an adjusted idle frequency range between the optical signal $B_2$ and the optical signal $B_3$ is not less than the bandwidth to which the optical signal $A_2$ is to be expanded. Then, the center frequency of the optical signal $A_2$ is adjusted from $f_{A2}$ to $f'_{A2}$, so that the idle frequency range on the two sides of $f'_{A2}$ is greater than $\dfrac{w'_{A2}}{2}$. Finally, the bandwidth of the optical signal $A_2$ is expanded from $w_{A2}$ to $w'_{A2}$.

It should be understood that an expansion method of the optical signal $B_k$ is similar to an expansion method of the optical signal $A_k$, and details are not described herein again by using an example.

It may be understood that, in the foregoing embodiments, the methods and/or the steps implemented by the first node may alternatively be implemented by a component (for example, a chip or a circuit) that may be used for the first node, and the methods and/or the steps implemented by the second node may alternatively be implemented by a component (for example, a chip or a circuit) that may be used for the second node.

Optionally, embodiments of this application further provide a communication apparatus. The communication apparatus is configured to implement the foregoing methods. The communication apparatus may be the first node in the foregoing method embodiments, an apparatus including the first node, or a component that may be used for the first node. Alternatively, the communication apparatus may be the second node in the foregoing method embodiments, an apparatus including the second node, or a component that may be used for the second node. It may be understood that, to implement the foregoing functions, the communication apparatus includes a hardware structure and/or a software module for performing corresponding functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 26 is a diagram of a structure of a communication apparatus according to this application. Referring to FIG. 26, the communication apparatus 260 may include the foregoing optical module 50. A structure of the optical module 50 may be shown in FIG. 5. Details are not described herein again. Optionally, the communication apparatus 260 may further include a processing module 60.

For example, the communication apparatus 260 is the first node in the foregoing method embodiments.

The laser modulator 503 may be configured to send a first optical signal to the second node. The first optical signal is obtained by modulating laser light emitted by the laser 501. The coherent receiver 504 may be configured to receive a second optical signal from the second node, and the laser 501 is configured to generate local oscillator light required by the coherent receiver 504. A center frequency of the first optical signal is $f_1$, a center frequency of the second optical signal is $f_2$, $f_1$ is different from $f_2$, and $|f_1 - f_2|$ is less than a first threshold.

Optionally, the laser modulator 503 may be further configured to send, to the second node, a first parameter for adjusting the first optical signal. The coherent receiver 504 may be further configured to receive first indication information from the second node. The first indication information indicates that the second node agrees to adjust the first optical signal based on the first parameter. The laser modulator 503 may be further configured to send second indication information to the second node. The second indication information indicates that the first node starts to adjust the first optical signal. The processing module 60 may be configured to: adjust a maximum frequency band width of the first optical signal to $w'_1$, and/or adjust the center frequency of the first optical signal to $f'_1$. The laser modulator 503 may be configured to send third indication information to the second node. The third indication information indicates that the first node has completed adjustment of the first optical signal.

Optionally, the laser modulator 503 may be further configured to send, to the second node, a second parameter for adjusting the second optical signal, and the coherent receiver 504 may be further configured to receive fourth indication information from the second node. The fourth indication information indicates that the second node agrees to adjust the second optical signal based on the second parameter. The laser modulator 503 may be further configured to send fifth indication information to the second node. The fifth indication information indicates the second node to start to adjust the second optical signal. The coherent receiver 504 may be further configured to receive sixth indication information from the second node. The sixth indication information indicates that the second node has completed adjustment of the second optical signal.

Optionally, the laser modulator 503 may be further configured to send, to the second node, a third parameter for adjusting the first optical signal and the second optical signal, and the coherent receiver 504 may be further configured to receive seventh indication information from the second node. The seventh indication information indicates that the second node agrees to adjust the first optical signal and the second optical signal based on the third parameter. The laser modulator 503 may be further configured to send second indication information to the second node. The second indication information indicates that the first node starts to adjust the first optical signal. The processing module 60 may be further configured to: adjust a maximum frequency band width of the first optical signal to $w'_1$, and/or adjust the center frequency of the first optical signal to $f'_1$. The laser modulator 503 may further send third indication information to the second node. The third indication information indicates that the first node has completed adjustment of the first optical signal. The laser modulator 503 may further send fifth indication information to the second node. The fifth indication information indicates the second node to start to adjust the second optical signal. The coherent receiver 504 may be further configured to receive sixth indication information from the second node. The sixth indication information indicates that the second node has completed adjustment of the second optical signal.

Optionally, the laser modulator 503 may be further configured to send, to the second node, a third parameter for adjusting the first optical signal and the second optical signal, and the coherent receiver 504 may be further configured to receive seventh indication information from the second node. The seventh indication information indicates that the second node agrees to adjust the first optical signal and the second optical signal based on the third parameter. The laser modulator 503 may be further configured to send fifth indication information to the second node. The fifth indication information indicates the second node to start to adjust the second optical signal. The coherent receiver 504 may be further configured to receive sixth indication information from the second node. The sixth indication information indicates that the second node has completed adjustment of the second optical signal. The laser modulator 503 may be further configured to send second indication information to the second node. The second indication information indicates that the first node starts to adjust the first optical signal. The processing module 60 may be further configured to: adjust a maximum frequency band width of the first optical signal to $w'_1$, and/or adjust the center frequency of the first optical signal to $f'_1$. The laser modulator 503 may be further configured to send third indication information to the second node. The third indication information indicates that the first node has completed adjustment of the first optical signal.

For example, the communication apparatus 260 is the second node in the foregoing method embodiments.

The laser modulator 503 may be configured to send the second optical signal to the first node through a first laser modulator. The second optical signal is obtained by modulating laser light emitted by a second laser. The processing module 60 may be configured to receive the first optical signal from the first node through a second coherent receiver. The second laser is configured to generate local oscillator light required by the second coherent receiver. A center frequency of the first optical signal is $f_1$, a center frequency of the second optical signal is $f_2$, $f_1$ is different from $f_2$, and $|f_1 - f_2|$ is less than a first threshold.

Optionally, the coherent receiver 504 may be further configured to receive a first parameter that is from the first node and that is for adjusting the first optical signal. Then, the laser modulator 503 may be further configured to send first indication information to the first node. The first indication information indicates that the second node agrees to adjust the first optical signal based on the first parameter. The coherent receiver 504 may be further configured to receive second indication information from the first node. The second indication information indicates that the first node starts to adjust the first optical signal. The laser modulator 503 may be configured to receive third indication information from the first node. The third indication information indicates that the first node has completed adjustment of the first optical signal.

Optionally, the coherent receiver 504 may be further configured to receive a second parameter that is from the first node and that is for adjusting the second optical signal. The laser modulator 503 may be further configured to send fourth indication information to the first node. The fourth indication information indicates that the second node agrees to adjust the second optical signal based on the second parameter. The coherent receiver 504 may be further configured to receive fifth indication information from the first node. The fifth indication information indicates the second node to start to adjust the second optical signal. The processing module 60 may be further configured to: adjust a maximum frequency band width of the second optical signal to $w_2'$, and/or adjust the center frequency of the second optical signal to $f_2'$. The laser modulator 503 may be further configured to send sixth indication information to the second node. The sixth indication information indicates that the second node has completed adjustment of the second optical signal.

Optionally, the coherent receiver 504 may be further configured to receive a third parameter that is from the first node and that is for adjusting the first optical signal and the second optical signal. The laser modulator 503 may be further configured to send seventh indication information to the first node. The seventh indication information indicates that the second node agrees to adjust the first optical signal and the second optical signal based on the third parameter. The coherent receiver 504 may be further configured to receive second indication information sent from the first node. The second indication information indicates that the first node starts to adjust the first optical signal. The coherent receiver 504 may be further configured to receive third indication information from the first node. The third indication information indicates that the first node has completed adjustment of the first optical signal. The laser modulator 503 may be further configured to send fifth indication information to the second node. The fifth indication information indicates the second node to start to adjust the second optical signal. The processing module 60 may be further configured to: adjust a maximum frequency band width of the second optical signal to $w_2'$, and/or adjust the center frequency of the second optical signal to $f_2'$. The laser modulator 503 may be further configured to send sixth indication information to the first node. The sixth indication information indicates that the second node has completed adjustment of the second optical signal.

Optionally, the coherent receiver 504 may be further configured to receive a third parameter that is from the first node and that is for adjusting the first optical signal and the second optical signal. The laser modulator 503 may be further configured to send seventh indication information to the first node. The seventh indication information indicates that the second node agrees to adjust the first optical signal and the second optical signal based on the third parameter. The coherent receiver 504 may be further configured to receive fifth indication information from the first node. The fifth indication information indicates the second node to start to adjust the second optical signal. The processing module 60 may be further configured to: adjust a maximum frequency band width of the second optical signal to $w_2'$, and/or adjust the center frequency of the second optical signal to $f_2'$. In addition, the second node may send sixth indication information to the first node. The sixth indication information indicates that the second node has completed adjustment of the second optical signal. The coherent receiver 504 may be further configured to receive second indication information sent from the first node. The second indication information indicates that the first node starts to adjust the first optical signal. The coherent receiver 504 may be further configured to receive third indication information from the first node. The third indication information indicates that the first node has completed adjustment of the first optical signal.

It should be noted that all related content of the steps in the foregoing method embodiments may be cited in functional description of corresponding functional modules. Details are not described herein again. The communication apparatus 260 provided in the embodiments may perform the foregoing single-fiber bidirectional communication method. Therefore, for technical effects that can be achieved by the communication apparatus 260, refer to the foregoing method embodiments. Details are not described herein again.

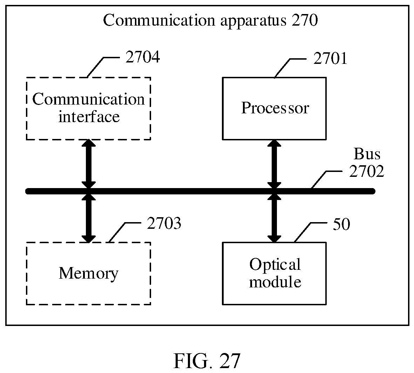

FIG. 27 shows another communication apparatus according to this application. Referring to FIG. 27, the communication apparatus 270 may be a processor 2701, a bus 2702, and an optical module 50. A structure of the optical module 50 may be shown in FIG. 5, and details are not described herein again. The processor 2701 may communicate with the optical module 50 through the bus 2702. For example, the processor 2701 may send signaling to the optical module 50 through the bus 2702, to configure related parameters of the modulator 503 and the coherent receiver 504 in the optical module 50. Optionally, the bus 2702 may be categorized into an address bus, a data bus, a control bus, and the like.

Optionally, the communication apparatus 270 may further include a memory 2703, and the memory 2703 may be configured to store signaling and/or data. For example, the memory 2703 may store a parameter for configuring the optical module, a packet that needs to be sent through the optical module, a packet received by the optical module, or the like.

Optionally, the communication apparatus 270 may further include a communication interface 2704. The communication interface 2704 may be used by the communication apparatus 270 to perform digital communication with another communication apparatus. In an implementation, the communication interface 2704 may be implemented through an interface circuit.

Optionally, the processor in this application may be a central processing unit (central processing unit, CPU), another general-purpose processor, a digital signal processor (digital signal processor, DSP), an application-specific integrated circuit (application-specific integrated circuit, ASIC), a programmable logic device (programmable logic device, PLD), or the like. The general-purpose processor may be a microprocessor or any conventional processor or the like. The PLD may be a complex programmable logic device (complex programmable logic device, CPLD), a field-programmable gate array (field-programmable gate array, FPGA), a generic array logic (generic array logic, GAL), or any combination thereof.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A single-fiber bidirectional communication method, applied to a first node, wherein the first node comprises a first optical module, the first optical module comprises a first laser, a first connection unit, a first coherent receiver, a first laser modulator, and a second connection unit, the first laser is separately connected to the first laser modulator and the first coherent receiver by the first connection unit, and the first coherent receiver and the first laser modulator are connected to a same optical fiber by the second connection unit; and the method comprises:

   sending, by the first node, a first optical signal to a second node through the first laser modulator, wherein the first optical signal is obtained by modulating laser light emitted by the first laser; and
   receiving, by the first node, a second optical signal from the second node through the first coherent receiver, wherein the first laser is configured to generate local oscillator light required by the first coherent receiver, wherein
   a center frequency of the first optical signal is $f_1$, a center frequency of the second optical signal is $f_2$, $f_1$ is different from $f_2$, and $|f_1 - f_2|$ is less than a first threshold.

2. The method according to claim 1, wherein a frequency range of the first optical signal and a frequency range of the second optical signal do not overlap or partially overlap.

3. The method according to claim 2, wherein $|f_1 - f_2| \geq \frac{w_1}{2}$, and $|f_1 - f_2| \geq \frac{w_2}{2}$, wherein $w_1$ is a maximum frequency band width of the first optical signal, and $w_2$ is a maximum frequency band width of the second optical signal.

4. The method according to any one of claims 1 to 3, wherein if an output frequency of the first laser is $f_3$,

$$f_1 - \frac{w_1}{2} < f_3 < f_2 + \frac{w_2}{2}$$ or

$$f_2 - \frac{w_2}{2} < f_3 < f_1 + \frac{w_1}{2}$$ , wherein $w_1$ is the maximum frequency band width of the first optical signal, and $w_2$ is the maximum frequency band width of the second optical signal.

5. The method according to any one of claims 1 to 4, wherein if the output frequency of the first laser is $f_3$, a frequency range of receiving the second optical signal by the first coherent receiver is ($f_3 - \Delta x$) to $f_3$ and $f_3$ to ($f_3 + \Delta x$), and $$\Delta x \geq |f_3 - f_2| + \frac{w_2}{2}$$ , wherein $w_2$ is the maximum frequency band width of the second optical signal.

6. The method according to any one of claims 1 to 5, wherein the method further comprises:

   sending, by the first node to the second node, a first parameter for adjusting the first optical signal;
   receiving, by the first node, first indication information from the second node, wherein the first indication information indicates that the second node agrees to adjust the first optical signal based on the first parameter;
   sending, by the first node, second indication information to the second node, wherein the second indication information indicates that the first node starts to adjust the first optical signal;
   adjusting, by the first node, the maximum frequency band width of the first optical signal to $w_1'$ , and/or adjusting the center frequency of the first optical signal to $f_1'$ ; and
   sending, by the first node, third indication information to the second node, wherein the third indication information indicates that the first node has completed adjustment of the first optical signal.

7. The method according to any one of claims 1 to 5, wherein the method further comprises:

   sending, by the first node to the second node, a second parameter for adjusting the second optical signal;
   receiving, by the first node, fourth indication information from the second node, wherein the fourth indication information indicates that the second node agrees to adjust the second optical signal based on the second parameter;
   sending, by the first node, fifth indication information to the second node, wherein the fifth indication information indicates the second node to start to adjust the second optical signal; and
   receiving, by the first node, sixth indication information from the second node, wherein the sixth indication information indicates that the second node has completed adjustment of the second optical signal.

8. The method according to any one of claims 1 to 5, wherein the method further comprises:

   sending, by the first node to the second node, a third parameter for adjusting the first optical signal and the second optical signal;
   receiving, by the first node, seventh indication information from the second node, wherein the seventh indication information indicates that the second node agrees to adjust the first optical signal and the second optical signal based on the third parameter;
   sending, by the first node, second indication information to the second node, wherein the second indication information indicates that the first node starts to adjust the first optical signal;
   adjusting, by the first node, the maximum frequency band width of the first optical signal to $w_1'$ , and/or adjusting the center frequency of the first optical signal to $f_1'$ ;
   sending, by the first node, third indication information to the second node, wherein the third indication information indicates that the first node has completed adjustment of the first optical signal;
   sending, by the first node, fifth indication information to the second node, wherein the fifth indication information indicates the second node to start to adjust the second optical signal; and
   receiving, by the first node, sixth indication information from the second node, wherein the sixth indication information indicates that the second node has completed adjustment of the second optical signal.

9. The method according to any one of claims 1 to 5, wherein the method further comprises:

   sending, by the first node to the second node, a third parameter for adjusting the first optical signal and the second optical signal;
   receiving, by the first node, seventh indication information from the second node, wherein the seventh indication information indicates that the second node agrees to adjust the first optical signal and the second optical signal based on the third parameter;

sending, by the first node, fifth indication information to the second node, wherein the fifth indication information indicates the second node to start to adjust the second optical signal;

receiving, by the first node, sixth indication information from the second node, wherein the sixth indication information indicates that the second node has completed adjustment of the second optical signal;

sending, by the first node, second indication information to the second node, wherein the second indication information indicates that the first node starts to adjust the first optical signal;

adjusting, by the first node, the maximum frequency band width of the first optical signal to $w'_1$, and/or adjusting the center frequency of the first optical signal to $f'_1$; and

sending, by the first node, third indication information to the second node, wherein the third indication information indicates that the first node has completed adjustment of the first optical signal.

10. The method according to any one of claims 1 to 5, wherein the first node communicates with n nodes through the first optical module, wherein $n \geq 2$; and when the second node is a $k^{th}$ node in the n nodes, $f_1 = f_{Ak}$, and $f_2 = f_{Bk}$, wherein $f_{Ak}$ is a center frequency of an optical signal $A_k$ sent by the first node to the $k^{th}$ node in the n nodes, $f_{Bk}$ is a center frequency of an optical signal $B_k$ sent by the $k^{th}$ node to the first node, and k is a positive integer from 1 to n.

11. The method according to claim 9 or 10, wherein when $k > 1$, $f_{Ak} > f_{A(k-1)}$, $f_{Ak} > f_{B(k-1)}$, $f_{Bk} > f_{A(k-1)}$, and $f_{Bk} > f_{B(k-1)}$; and if k is an odd number, $f_{Ak} < f_{Bk}$; or if k is an even number, $f_{Bk} < f_{Ak}$; or when $k > 1$, $f_{Ak} > f_{A(k-1)}$, $f_{Ak} > f_{B(k-1)}$, $f_{Bk} > f_{A(k-1)}$, and $f_{Bk} > f_{B(k-1)}$; and if k is an odd number, $f_{Bk} < f_{Ak}$; or if k is an even number, $f_{Ak} < f_{Bk}$.

12. The method according to claim 10 or 11, wherein the method further comprises:

sending, by the first node to the $k^{th}$ node in the n nodes, a fourth parameter for adjusting the optical signal $A_k$;

receiving, by the first node, eighth indication information from the $k^{th}$ node in the n nodes, wherein the eighth indication information indicates that the $k^{th}$ node in the n nodes agrees to adjust the optical signal $A_k$ based on the fourth parameter;

sending, by the first node, ninth indication information to the $k^{th}$ node in the n nodes, wherein the ninth indication information indicates that the first node starts to adjust the optical signal $A_k$;

adjusting, by the first node, a maximum frequency band width of the optical signal $A_k$ to $w'_{Ak}$, and/or adjusting the center frequency of the optical signal $A_k$ to $f'_{Ak}$; and

sending, by the first node, tenth indication information to the $k^{th}$ node in the n nodes, wherein the tenth indication information indicates that the first node has completed adjustment of the optical signal $A_k$.

13. The method according to claim 10 or 11, wherein the method further comprises:

sending, by the first node to the $k^{th}$ node in the n nodes, a fifth parameter for adjusting the optical signal $B_k$;

receiving, by the first node, eleventh indication information from the $k^{th}$ node in the n nodes, wherein the eleventh indication information indicates that the $k^{th}$ node in the n nodes agrees to adjust the optical signal $B_k$ based on the fifth parameter;

sending, by the first node, twelfth indication information to the $k^{th}$ node in the n nodes, wherein the twelfth indication information indicates the $k^{th}$ node in the n nodes to start to adjust the optical signal $B_k$; and

receiving, by the first node, thirteenth indication information from the $k^{th}$ node in the n nodes, wherein the thirteenth indication information indicates that the $k^{th}$ node in the n nodes has completed adjustment of the optical signal $B_k$.

14. The method according to claim 10 or 11, wherein the method further comprises:

sending, by the first node to the $k^{th}$ node in the n nodes, a sixth parameter for adjusting the optical signal $A_k$ and the optical signal $B_k$;

receiving, by the first node, fourteenth indication information from the $k^{th}$ node in the n nodes, wherein the fourteenth indication information indicates that the $k^{th}$ node in the n nodes agrees to adjust the optical signal $A_k$ and the optical signal $B_k$ based on the sixth parameter;

sending, by the first node, ninth indication information to the $k^{th}$ node in the n nodes, wherein the ninth indication information indicates that the first node starts to adjust the optical signal $A_k$;

adjusting, by the first node, a maximum frequency band width of the optical signal $A_k$ to $w'_{Ak}$, and/or adjusting the center frequency of the optical signal $A_k$ to $f'_{Ak}$ ;

sending, by the first node, tenth indication information to the k$^{th}$ node in the n nodes, wherein the tenth indication information indicates that the first node has completed adjustment of the optical signal $A_k$;

sending, by the first node, twelfth indication information to the k$^{th}$ node in the n nodes, wherein the twelfth indication information indicates the k$^{th}$ node in the n nodes to start to adjust the optical signal $B_k$; and

receiving, by the first node, thirteenth indication information from the k$^{th}$ node in the n nodes, wherein the thirteenth indication information indicates that the k$^{th}$ node in the n nodes has completed adjustment of the optical signal $B_k$.

15. The method according to claim 10 or 11, wherein the method further comprises:

sending, by the first node to the k$^{th}$ node in the n nodes, a sixth parameter for adjusting the optical signal $A_k$ and the optical signal $B_k$;

receiving, by the first node, fourteenth indication information from the k$^{th}$ node in the n nodes, wherein the fourteenth indication information indicates that the k$^{th}$ node in the n nodes agrees to adjust the optical signal $A_k$ and the optical signal $B_k$ based on the sixth parameter;

sending, by the first node, twelfth indication information to the k$^{th}$ node in the n nodes, wherein the twelfth indication information indicates the k$^{th}$ node in the n nodes to start to adjust the optical signal $B_k$;

receiving, by the first node, thirteenth indication information from the k$^{th}$ node in the n nodes, wherein the thirteenth indication information indicates that the k$^{th}$ node in the n nodes has completed adjustment of the optical signal $B_k$;

sending, by the first node, ninth indication information to the k$^{th}$ node in the n nodes, wherein the ninth indication information indicates that the first node starts to adjust the optical signal $A_k$;

adjusting, by the first node, a maximum frequency band width of the optical signal $A_k$ to $W'_{Ak}$ , and/or adjusting the center frequency of the optical signal $A_k$ to $f'_{Ak}$ ; and

sending, by the first node, tenth indication information to the k$^{th}$ node in the n nodes, wherein the tenth indication information indicates that the first node has completed adjustment of the optical signal $A_k$.

16. The method according to claim 12 or 14, wherein before the sending, by the first node, ninth indication information to the k$^{th}$ node in the n nodes, the method further comprises:

sending, by the first node to a node x in the n nodes, a seventh parameter for adjusting an optical signal $A_x$ and/or an optical signal $B_x$, wherein the seventh parameter comprises an adjusted center frequency $f'_{Ax}$ of the optical signal $A_x$ and/or an adjusted center frequency $f'_{Bx}$ of the optical signal $B_x$, x is a positive integer from 1 to n, and x is not equal to k; and receiving, by the first node, fifteenth indication information from the node x in the n nodes, wherein the fifteenth indication information indicates that the node x in the n nodes agrees to adjust the optical signal $A_x$ and/or the optical signal $B_x$ based on the seventh parameter.

17. The method according to claim 13 or 15, wherein before the sending, by the first node, twelfth indication information to the k$^{th}$ node in the n nodes, the method further comprises:

sending, by the first node to a node x in the n nodes, a seventh parameter for adjusting an optical signal $A_x$ and/or an optical signal $B_x$, wherein the seventh parameter comprises an adjusted center frequency $f'_{Ax}$ of the optical signal $A_x$ and/or an adjusted center frequency $f'_{Bx}$ of the optical signal $B_x$, x is a positive integer from 1 to n, and x is not equal to k; and receiving, by the first node, fifteenth indication information from the node x in the n nodes, wherein the fifteenth indication information indicates that the node x in the n nodes agrees to adjust the optical signal $A_x$ and/or the optical signal $B_x$ based on the seventh parameter.

18. A single-fiber bidirectional communication method, applied to a second node, wherein the second node comprises a second optical module, the second optical module comprises a second laser, a third connection unit, a second coherent receiver, a second laser modulator, and a fourth connection unit, the second laser is separately connected to the second laser modulator and the second coherent receiver by the third connection unit, and the second coherent receiver and the second laser modulator are connected to a same optical fiber by the fourth connection unit; and the method comprises:

sending, by the second node, a second optical signal to a first node through the second laser modulator, wherein the second optical signal is obtained by modulating laser light emitted by the second laser; and

receiving, by the second node, a first optical signal from the first node through the second coherent receiver, wherein the second laser is configured to generate local oscillator light required by the second coherent receiver, wherein a center frequency of the first optical signal is $f_1$, a center frequency of the second optical signal is $f_2$, $f_1$ is different from $f_2$, and $|f_1 - f_2|$ is less than a first threshold.

19. The method according to claim 18, wherein if an output frequency of the second laser is $f_4$,

$$f_1 - \frac{w_1}{2} < f_4 < f_2 + \frac{w_2}{2}$$ or

$$f_2 - \frac{w_2}{2} < f_4 < f_1 + \frac{w_1}{2}$$ , wherein $w_1$ is a maximum frequency band width of the first optical signal, and $w_2$ is a maximum frequency band width of the second optical signal.

20. The method according to claim 18 or 19, wherein if the output frequency of the second laser is $f_4$, a frequency range of receiving the first optical signal by the second coherent receiver is $(f_4 - \Delta y)$ to $f_4$ and $f_4$ to $(f_4 + \Delta y)$, and $$\Delta y \geq |f_4 - f_1| + \frac{w_1}{2}$$ , wherein $w_1$ is the maximum frequency band width of the first optical signal.

21. A communication apparatus, wherein the communication apparatus comprises a first optical module, the first optical module comprises a first laser, a first connection unit, a first coherent receiver, a first laser modulator, and a second connection unit, the first laser is separately connected to the first laser modulator and the first coherent receiver by the first connection unit, and the first coherent receiver and the first laser modulator are connected to a same optical fiber by the second connection unit; and the communication apparatus is configured to perform the method according to any one of claims 1 to 17.

22. A communication apparatus, wherein the communication apparatus comprises a second optical module, the second optical module comprises a second laser, a third connection unit, a second coherent receiver, a second laser modulator, and a fourth connection unit, the second laser is separately connected to the second laser modulator and the second coherent receiver by the third connection unit, and the second coherent receiver and the second laser modulator are connected to a same optical fiber by the fourth connection unit; and the communication apparatus is configured to perform the method according to any one of claims 18 to 20.

23. A computer-readable storage medium, wherein the computer-readable storage medium stores a computer program, and when the computer program is executed by a processor, the method according to any one of claims 1 to 17 or the method according to any one of claims 18 to 20 is implemented.

FIG. 1

FIG. 2

FIG. 3

FIG. 4

Optical module 50

Sent electrical
signal

Laser
light

503
Laser
modulator

Sent optical
signal

501

Laser

Connection
unit

502

505

Connection
unit

Optical fiber

Laser
light

Coherent
receiver

504

Received
optical signal

Received
electrical signal

FIG. 5

First node

Second node

601. First optical signal

602. Second optical signal

FIG. 6

$f_1$     $f_2$

First optical
signal

Second optical
signal

Frequency domain

$w_1$     $w_2$

FIG. 7

$f_2$     $f_1$

First optical
signal

Second optical
signal

Frequency domain

$w_2$     $w_1$

FIG. 8

First node

Second node

901. First parameter →

← 902. First indication information

903. Second indication information →

904. Adjust a maximum frequency band width of a first optical signal to $w'_1$, and/or adjust a center frequency of the first optical signal to $f'_1$

← 905. Third indication information

FIG. 9

First node

Second node

1001. Second parameter →

← 1002. Fourth indication information

1003. Fifth indication information →

1004. Adjust a maximum frequency band width of a second optical signal to $w'_2$, and/or adjust a center frequency of the second optical signal to $f'_2$

← 1005. Sixth indication information

FIG. 10

```
┌────────────┐                                           ┌─────────────┐
│ First node │                                           │ Second node │
└────────────┘                                           └─────────────┘
       │──────────────── 1101. Third parameter ───────────────▶│
       │                                                        │
       │◀──────────── 1102. Seventh indication information ─────│
       │                                                        │
       │──────────── 1103. Second indication information ──────▶│
┌──────────────────────────────────┐                           │
│ 1104. Adjust a maximum frequency  │                          │
│ band width of a first optical     │                          │
│ signal to w'₁, and/or adjust a    │                          │
│ center frequency of the first     │                          │
│ optical signal to f'₁             │                          │
└──────────────────────────────────┘                           │
       │◀──────────── 1105. Third indication information ───────│
       │                                                        │
       │──────────── 1106. Fifth indication information ───────▶│
       │                              ┌────────────────────────────────────┐
       │                              │ 1107. Adjust a maximum frequency    │
       │                              │ band width of a second optical      │
       │                              │ signal to w'₂, and/or adjust a      │
       │                              │ center frequency of the second      │
       │                              │ optical signal to f'₂               │
       │                              └────────────────────────────────────┘
       │◀──────────── 1108. Sixth indication information ───────│
       │                                                        │
```

FIG. 11

| First node | | Second node |
|---|---|---|

1201. Third parameter →

← 1202. Seventh indication information

1203. Fifth indication information →

1204. Adjust a maximum frequency band width of a second optical signal to $w_2'$, and/or adjust a center frequency of the second optical signal to $f_2'$

← 1205. Sixth indication information

1206. Second indication information →

1207. Adjust a maximum frequency band width of a first optical signal to $w_1'$, and/or adjust a center frequency of the first optical signal to $f_1'$

← 1208. Third indication information

FIG. 12

FIG. 13

FIG. 14

FIG. 15

FIG. 16

FIG. 17

FIG. 18

FIG. 19

FIG. 20

First node

$k^{th}$ node in n nodes

2101. Fifth parameter

2102. Eleventh indication information

2103. Twelfth indication information

2104. Adjust a maximum frequency band width of an optical signal $B_k$ to $w'_{Bk}$, and/or adjust a center frequency of the optical signal $B_k$ to $f'_{Bk}$

2105. Thirteenth indication information

FIG. 21

First node

$k^{th}$ node in n nodes

2201. Sixth parameter

2202. Fourteenth indication information

2203. Ninth indication information

2204. Adjust a maximum frequency band width of an optical signal $A_k$ to $w'_{Ak}$, and/or adjust a center frequency of the optical signal $A_k$ to $f'_{Ak}$

2205. Tenth indication information

2206. Twelfth indication information

2207. Adjust a maximum frequency band width of an optical signal $B_k$ to $w'_{Bk}$, and/or adjust a center frequency of the optical signal $B_k$ to $f'_{Bk}$

2208. Thirteenth indication information

FIG. 22

First node

$k^{th}$ node in n nodes

2301. Sixth parameter

2302. Fourteenth indication information

2303. Twelfth indication information

2304. Adjust a maximum frequency band width of an optical signal $B_k$ to $w'_{Bk}$, and/or adjust a center frequency of the optical signal $B_k$ to $f'_{Bk}$

2305. Thirteenth indication information

2306. Ninth indication information

2307. Adjust a maximum frequency band width of an optical signal $A_k$ to $w'_{Ak}$, and/or adjust a center frequency of the optical signal $A_k$ to $f'_{Ak}$

2308. Tenth indication information

FIG. 23

FIG. 24

FIG. 25

Communication apparatus 260

Optical module 50 — Processing module 60

FIG. 26

Communication apparatus 270

2704

Communication
interface

2701

Processor

Bus
2702

2703

Memory

50

Optical
module

FIG. 27

# INTERNATIONAL SEARCH REPORT

| International application No. |
| --- |
| **PCT/CN2023/104768** |

### A.  CLASSIFICATION OF SUBJECT MATTER

H04B10/25(2013.01)i

According to International Patent Classification (IPC) or to both national classification and IPC

### B.  FIELDS SEARCHED

Minimum documentation searched (classification system followed by classification symbols)

IPC: H04B,H04J

Documentation searched other than minimum documentation to the extent that such documents are included in the fields searched

Electronic data base consulted during the international search (name of data base and, where practicable, search terms used)

CNTXT, ENTXTC, ENTXT, WPABS: 单纤双向, 调整, 可调, 改变, 调制, 分光, 分路, 环形器, 激光器, 滤波器, 耦合器, 频率, 相干, 光模块, laser, circulator, filter, split+, coupler, modulator, coherence, adjust+, monofiber, bidirection, optical

### C.  DOCUMENTS CONSIDERED TO BE RELEVANT

| Category* | Citation of document, with indication, where appropriate, of the relevant passages | Relevant to claim No. |
| --- | --- | --- |
| X | WO 2022054166 A1 (NIPPON TELEGRAPH AND TELEPHONE CORP.) 17 March 2022 (2022-03-17) <br> description, paragraphs [0048]-[0063], and figure 1 | 1-2, 10, 18, 21-23 |
| Y | WO 2022054166 A1 (NIPPON TELEGRAPH AND TELEPHONE CORP.) 17 March 2022 (2022-03-17) <br> description, paragraphs [0048]-[0063], and figure 1 | 6-9, 12-17 |
| Y | CN 113055097 A (ZTE CORP.) 29 June 2021 (2021-06-29) <br> description, paragraphs [0030]-[0062] | 6-9, 12-17 |
| X | CN 110868258 A (ZTE CORP.) 06 March 2020 (2020-03-06) <br> description, paragraphs [0056]-[0065] and [0083]-[0093] | 1-2, 10, 18, 21-23 |
| A | CN 111224719 A (UTSTARCOM INC.) 02 June 2020 (2020-06-02) <br> entire document | 1-23 |
| A | CN 114337820 A (HUAWEI TECHNOLOGIES CO., LTD.) 12 April 2022 (2022-04-12) <br> entire document | 1-23 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 September 2023** | **12 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
|---|---|
| | PCT/CN2023/104768 |

**C.     DOCUMENTS CONSIDERED TO BE RELEVANT**

| Category* | Citation of document, with indication, where appropriate, of the relevant passages | Relevant to claim No. |
|---|---|---|
| A | US 2020137468 A1 (XIEON NEXTWORKS S.À.R.L.) 30 April 2020 (2020-04-30) entire document | 1-23 |

Form PCT/ISA/210 (second sheet) (July 2022)

INTERNATIONAL SEARCH REPORT
Information on patent family members

International application No.

**PCT/CN2023/104768**

| Patent document cited in search report | | | Publication date (day/month/year) | Patent family member(s) | | | Publication date (day/month/year) |
|---|---|---|---|---|---|---|---|
| WO | 2022054166 | A1 | 17 March 2022 | JPWO | 2022054166 | A1 | 17 March 2022 |
| | | | | EP | 4207635 | A1 | 05 July 2023 |
| | | | | CN | 116491080 | A | 25 July 2023 |
| CN | 113055097 | A | 29 June 2021 | None | | | |
| CN | 110868258 | A | 06 March 2020 | WO | 2020043096 | A1 | 05 March 2020 |
| | | | | EP | 3846360 | A1 | 07 July 2021 |
| | | | | US | 2021320723 | A1 | 14 October 2021 |
| CN | 111224719 | A | 02 June 2020 | None | | | |
| CN | 114337820 | A | 12 April 2022 | WO | 2022068656 | A1 | 07 April 2022 |
| | | | | EP | 4210242 | A1 | 22 September 2021 |
| | | | | US | 2023239052 | A1 | 28 March 2023 |
| US | 2020137468 | A1 | 30 April 2020 | WO | 2019001857 | A1 | 03 January 2019 |
| | | | | EP | 3422602 | A1 | 02 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210901631